# EUROPÄISCHE PATENTSCHRIFT

(11) **EP 3 636 517 B1**
(45) Veröffentlichungstag und Bekanntmachung des Hinweises auf die Patenterteilung: **22.02.2023**
(21) Anmeldenummer: 18199903.8
(22) Anmeldetag: 11.10.2018
(51) Int. Cl.: B62D 25/02, B62D 29/04, B60R 21/02, B60P 3/32, B62D 21/15

(54) **SICHERHEITSKABINE FÜR EIN WOHN- BZW. REISEMOBIL MIT DEFORMATIONSELEMENTEN**
SAFETY CABIN FOR A RESIDENTIAL OR CAMPER VAN WITH DEFORMATION ELEMENTS
CABINE DE SÉCURITÉ POUR UN CAMPING-CAR OU UNE CARAVANE AUTOMOBILE POURVUE D'ÉLÉMENTS DE DÉFORMATION

(43) Veröffentlichungstag der Anmeldung: 15.04.2020
(73) Patentinhaber: ELDA Entwicklungsgesellschaft mbH, 22529 Hamburg (DE)
(72) Erfinder: Rödiger, Andreas, 22529 Hamburg (DE)
(74) Vertreter: Hertin und Partner Rechts- und Patentanwälte PartG mbB

(56) Entgegenhaltungen:
- EP-A1- 0 057 909
- DE-A1-102007 026 762
- DE-A1-102015 224 689
- DE-A1-102016 006 864
- DE-T2- 69 309 831
- DE-U1-202016 103 524
- DE-U1-202017 103 910
- US-A- 5 218 792
- US-A1- 2018 079 191
- US-B1- 7 000 978
- US-B1- 8 474 871

## Beschreibung

Die Erfindung betrifft eine Sicherheitskabine für ein Wohn- bzw. Reisemobil, wobei in dieser in mindestens einem Bereich mindestens ein stabilisierendes Deformationselement eingebracht vorliegt. Dieses weist bevorzugt eine hohe Zugfestigkeit und Bruchdehnung auf und umfasst insbesondere faserverstärkten Kunststoff. Ebenfalls betrifft die Erfindung ein Deformationselement und ein Verfahren zur Stabilisierung einer Kabine.

### Hintergrund und Stand der Technik

Im Handel sind unterschiedliche Bauformen von Wohnmobilen erhältlich, aktuell sind das vor allem Alkovenmobile, teilintegrierte Wohnmobile, (voll-) integrierte Wohnmobile, Liner und/oder Kastenwagen. Allen bis auf den Kastenwagen ist gemein, dass Hersteller von Wohnmobilen die Fahrgestelle mit Führerhaus oder nur die Fahrgestelle erwerben und dann mit einem Aufbau/Anbau versehen, der Freizeit-, Urlaubs-, Campingzwecken, etc. dienlich ist. Selten wird der gesamte Aufbau von einem Fahrzeughersteller übernommen. Im Fall der oben genannten Fahrzeugtypen wird der Aufbau vorrangig aus einem Holz-Fachwerk, Alu-Sandwich und/oder GFK-Monocoque hergestellt. Die verwendeten Materialien sind meist ein Materialmix aus XPS-Schäumen, EPS-Schäumen, PU-Schäumen, etc., die mit Platten aus glasfaserverstärktem Kunststoff (GFK) und/oder Aluminium oder Holz oder sonstigen Materialen zu einem Sandwich aufgebaut werden. Dieser Aufbau ist preiswert und weist eine gute Beständigkeit gegen Witterungseinflüsse auf. Allerdings bietet er den Insassen bauartbedingt nur einen geringen bis gar keinen Schutz vor den Folgen eines eventuellen Unfalles, da die Konstruktion dafür keine oder nur unzureichende mechanische Eigenschaften vorhält. Dabei wurde in der Vergangenheit davon ausgegangen, dass stabilitäts- und/oder sicherheitserhöhende Maßnahmen kostspielig sowie aufwendig sind und das Gewicht der Fahrzeuge enorm erhöhen.

DE 202016103524 U1 offenbart ein Reisemobil. Dieses ist in ein Fahrerhaus und einer dem Fahrerhaus angrenzenden Wohnkabine aufgeteilt. Beide Bereiche sind durch eine B-Säulenkonstruktion getrennt, wobei dieser faserverstärkte Kunststoff umfasst und für die erhöhte Sicherheit der Passagiere im Fahrerhaus dienen soll.

DE 102007026762 A1 beschreibt Längs- und Querträger, welche glasfaserverstärkten Kunststoff umfassen und demnach auch als Deformationselemente dienen. Die Träger sind dazu eingerichtet, die Stabilität einer Fahrgastzelle zu erhöhen, sodass der Einsatz dünnerer Bleche in der Karosserie ermöglicht wird. Eine derartige Ausgestaltung wird auch für Wohnwagen beschrieben.

Die in dem Dokument beschrieben Verstärkungselemente sind nur in der Karosserie eingebracht, insbesondere in den Rahmen der Karosserie.

DE 20 2017 103 910 U1 beschreibt einen faserverstärkten Führerstand für ein Wohnmobil. Dabei können Verstärkungsfasern aus Glas, Kohlenstoff und Aramid verwendet werden.

DE 20 2016 006864 A1 offenbart einen Aufbau für ein Wohn- bzw. Reisemobil mit einer Vielzahl von Verstärkungselementen, wobei insbesondere ein hinterer Teil des Wohn- bzw. Reisemobils als eine Deformationszone ausgestaltet ist

US 8474871 B1 beschreibt eine Rahmenstruktur für einen Bodenbereich von Wohnwägen und 10 Wohnmobilen aus faserverstärkten Längs- und Querträgern. Zur Verbindung der Träger untereinander und mit einer Bodenplatte werden mehrere Faserlagen übereinander gebracht. Es werden Glas- und Kohlestoffasern verwendet.

US 7 000 978 B1 beschreibt eine Sicherheitskabine mit einem stabilisierenden Deformationselement aus faserverstärktem Kunststoff. Die Faserverstärkung ist für eine Erhöhung einer Festigkeit der Sicherheitskabine konfiguriert. Dadurch kann eine Umwandlung von kinetischer Energie bei einem zumindest teilweisen unelastischen Stoß der Sicherheitskabine erricht werden. Das Deformationselement umfasst eine Faserverstärkung mit Aramidfasern.

### Aufgabe der Erfindung

Aufgabe der Erfindung ist es, ein Wohn- bzw. Reisemobil ohne die Nachteile des Standes bereitzustellen.

Insbesondere war es eine Aufgabe der Erfindung ein Wohn- bzw. Reisemobil bereitzustellen, welches ohne großen konstruktiven Mehraufwand und ohne (wesentliche) Erhöhung des Fahrzeuggewichts die Sicherheit des Fahrzeugs enorm zu verbessern. Dabei sollten auch die Herstellungskosten und/oder Nachrüstungskosten möglichst gering gehalten werden.

### Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.

In einem ersten Aspekt betrifft die Erfindung eine Sicherheitskabine für ein Wohn- bzw. Reisemobil, wobei in mindestens einem Bereich der Kabine mindestens ein stabilisierendes Deformationselement aus faserverstärktem Kunststoff umfasst, welches bevorzugt zumindest teilweise in einem äußeren Bereich der Sicherheitskabine vorliegt, wobei die Faserverstärkung konfiguriert ist für eine Erhöhung einer Festigkeit (bevorzugt einer Zugfestigkeit, Druckfestigkeit, Biegefestigkeit und/oder Biegezugfestigkeit) der Sicherheitskabine und eine Umwandlung von kinetischer Energie (bevorzugt in Spannungsarbeit und/oder Verformungsarbeit) bei einem zumindest teilweisen unelastischen Stoß der Sicherheitskabine. wobei in mindestens einem Bereich der Kabine mindestens ein stabilisierendes Deformationselement eingebracht vorliegt. Eine Sicherheitskabine unterscheidet sich gegenüber einem gewöhnlichen Aufbau bevorzugt dadurch, dass ein Deformationselement in für die Sicherheit besonders sensiblen Bereichen vorliegt. Dadurch soll die Stabilität des Aufbaus bei einem Unfall erhöht werden und dessen Verhalten als Knautschzone verbessert werden. Dafür werden zunächst bevorzugt geeignete, besonders sensible Bereiche bestimmt. Außerdem soll das Deformationselement selber geeignete physikalische Eigenschaften aufweisen. Das Element umfasst faserverstärkten Kunststoff, z. B. eine stabile Platte, ein Vierkant oder Rundelement. Erfindungsgemäß umfasst das Deformationselement eine wabenförmige Struktur aus faserverstärktem Kunststoff, welches bevorzugt laminiert wird/ist und so ein in die Kabine eingebrachtes Deformationselement aus faserverstärktem Kunststoff bildet. Bevorzugt ist der faserverstärkte Kunststoff dabei kohlenstofffaserverstärktem Kunststoff (CFK) und/oder umfassend Verstärkungen aus Aramidfasern.

Die Sicherheitskabine umfasst bevorzugt die äußeren Bereiche, z. B. die Außenwände des Aufbaus und/oder der Karosserie des Wohn- bzw. Reisemobils. Auch die gesamte Karosserie, die Fahrgastzelle und/oder der Aufbau bzw. die Kabine kann bevorzugt mit Sicherheitskabine gemeint sein. Auch weitere Elemente, wie z. B. das Chassis (Fahrgestell) und Innenwände, können umfasst sein.

Erfindungsgemäß umfasst die Sicherheitskabine nur den Teil des Mobils, der nicht zum Fahrerhaus gehört. Eine Sicherheitskabine unterscheidet sich von einer gewöhnlichen Kabine bzw. Fahrgastzelle eines Wohn- und/oder Reisemobils bevorzugt dadurch, dass die Sicherheit der Kabine gegenüber diesen erhöht ist, insbesondere durch Einbringen mindestens eines Deformationselements.

Durch die Verwendung mindestens eines stabilisierenden Deformationselementes kann die Sicherheit der Passagiere zum Schutz vor Unfällen entscheidend verbessert werden. Dabei können bevorzugt durch fachmännische Auswertung geeignete Bereiche der Kabine bestimmt werden, welche besonders unfallanfällig sind, für die Stabilität der Kabine besonders bedeutend sind und/oder aus anderen Gründen eine besondere Signifikanz für die Unfallsicherheit haben. Diese Bestimmung kann vor allem durch Auswertung von Crashtests und/oder theoretischen Berechnungen vorgenommen werden. Eines oder mehrere Deformationselemente können dabei an jeweils geeigneter Stelle/ geeigneten Bereichen angebracht werden. Es kann sich aber auch um ein durchgehendes Deformationselement handeln, welches z. B. mehrere geeignete Bereiche umfasst.

Das Deformationselement erhöht dabei die Sicherheit bei Unfällen, bevorzugt durch seine Stabilitäts- und/oder Festigkeitseigenschaften, durch eine bevorzugte Zug- und/oder Druckfestigkeit, durch ein bevorzugtes E-Modul und/oder durch sonstige relevante Eigenschaften. Diese Eigenschaften des Elements stehen sowohl für sich als auch in einem, bevorzugt synergistischem Wechselspiel mit den übrigen Elementen der Kabine. So können bevorzugt die gesamten Eigenschaften der Kabine über die Bereiche des Deformationselements hinaus im gewünschten Sinne beeinflusst werden.

Hierzu wird das Deformationselement in die Sicherheitskabine eingebracht. Das bedeutet insbesondere, dass das Deformationselement mit den anderen Elementen der Sicherheitskabine so zusammenwirken kann, dass es die Stabilität und/oder die Unfallsicherheit erhöht. Zum Beispiel kann das Deformationselement an einer inneren und/oder äußeren Fläche der Sicherheitskabine auf- und/oder eingebracht werden, z. B. durch eine Verbindung (Fügung) durch bspw. Aufkleben, Aufnieten, Verschweißen, Festschrauben, Festnageln, Verlöten, Vulkanisieren, Laminieren, eine magnetische Verbindung, eine Saugverbindung, eine Klemmverbindung und/oder allgemein eine Kraft- bzw. formschlüssige Verbindung.

Bevorzugt liegt das Deformationselement zumindest teilweise in einem äußeren Bereich der Sicherheitskabine vor. Das bedeutet insbesondere, dass der äußeren Bereich das Deformationselement umfasst oder sogar im Wesentlichen bzw. teilweise aus diesem gebildet ist. Ebenso kann es sein, dass das Deformationselement z. B. Teile eines Querträgers und/oder einer inneren Wand innerhalb der Kabine ist, jedoch sind auch dann Teile des Deformationselements in dem äußeren Bereich umfasst, z. B. an den Verbindungselementen des Deformationselement zum äußeren Bereich. Dieses kann bspw. entsprechen abgewinkelt sein und/oder Verbindungsflächen aufweisen, so dass eine stabile Verbindung mit dem äußeren Bereich ermöglicht wird.

Ein äußerer Bereich umfasst bevorzugt alle Elemente der Sicherheitskabine, die eine Außenfläche dieser umfassen, z. B. die Außenwände.

Die Faserverstärkung ist bevorzugt konfiguriert für eine Erhöhung einer Festigkeit, bevorzugt einer Zugfestigkeit, Druckfestigkeit, Biegefestigkeit und/oder Biegezugfestigkeit, der Sicherheitskabine und eine Umwandlung von kinetischer Energie, bevorzugt in Spannungsarbeit und/oder Verformungsarbeit, bei einem zumindest teilweisen unelastischen Stoß der Sicherheitskabine. Das bedeutet, dass das faserverstärkte Deformationselement an den entsprechenden Stellen eingebracht wird und die Faser zum einen die entsprechenden Eigenschaften entlang der Längsrichtung der Faser selber aufweisen, zum anderen die Ausrichtung der Fasern so vorgenommen wird, dass diese Eigenschaften bei der Erhöhung der Festigkeit der Kabine und/oder der Umwandlung von kinetischer Energie bei einem Stoß aufgrund eines Unfalls zum Tragen kommen.

Zum einen soll bevorzugt die Stabilität und/oder Festigkeit, mindestens von Bereichen der Kabine erhöht werden, zum anderen soll die bei einem Unfall entstehende Energie bevorzugt so aufgenommen und/oder geleitet werden, dass diese möglichst für die Insassen minimiert wird. Erkenntnisse aus Crashtests und/oder Berechnungen werden bevorzugt verwendet, um geeignete Bereiche zum Einbringen eines Deformationselements zu identifizieren.

Bei Unfällen spielen häufig insbesondere zwei Faktoren eine Rolle: zum einen bevorzugt die Stabilität einer Fahrgastzelle, Karosserie und/oder Sicherheitskabine. Diese ist insbesondere dafür geeignet, den Insassen einen wohldefinierten Überlebensraum zu sichern, bei dem ein Insasse im Wesentlichen in der Relativposition innerhalb des Fahrzeugs, in der er sich vor dem Unfall befunden hat, zu belassen und/oder vor Teilen der Fahrgastzelle, Karosserie und/oder Sicherheitskabine sowie vor anderen Gegenständen aus dem Inneren und/oder Äußeren der Fahrgastzelle, Karosserie und/oder Sicherheitskabine zu schützen. Des Weiteren soll eine Fahrgastzelle, Karosserie und/oder Sicherheitskabine zur Erhöhung der Sicherheit vorteilhafterweise eine Deformationszone bzw. Knautschzone aufweisen. Diese soll die kinetische Energie bei einem Unfall, welche auch bei hoher Stabilität der Fahrgastzelle, Karosserie und/oder Sicherheitskabine eine große Gefahr für die Insassen darstellt, im Wesentlichen und/oder mindestens teilweise in Verformungsenergie bzw. -arbeit des Materials umwandeln. Diese Eigenschaft soll im folgenden bevorzugt (Energie-) Umwandlungsfähigkeit genannt werden. Der Fachmann weiß, dass beide Eigenschafen dabei bevorzugt in einer Abhängigkeit und/oder einem Wechselspiel zueinander stehen können. Die vorgenannten Eigenschaften spielen bevorzugt bei der Durchführung von Crashtests eine besondere Rolle und können durch geeignete Materialeigenschaften im gewünschten Sinne beeinflusst werden. Ein Fachmann weiß, wie er z. B. Weichheit, Bruchdehnung, Zugfestigkeit, E-Modul und/oder Stabilität sowie eine bevorzugte Richtungsabhängigkeit von Sicherheitskabine, Deformationselement(en) bzw. von diesen umfassten Komponenten auswählen muss, um die gewünschten Eigenschaften zu erreichen. Ebenso können diese Eigenschaften wie auch eine generelle Erhöhung der Unfallsicherheit durch Crashtests gemessen und/oder theoretisch berechnet werden.

Ein Fachmann weiß, wie moderne Crashtest durchgeführt werden und welche Mess- und Auswertmethoden zum Einsatz kommen. Durch Crashtests kann vorteilhafterweise festgestellt werden, wo das Einbringen eines Deformationselements die Stabilität der Kabine in gewünschtem Maße und/oder besonders stark erhöht und inwiefern die Sicherheit durch das Einbringen erhöht wird. Dabei können bevorzugt Bereiche besonders relevant sein, die statistisch häufig bei Unfällen in Mitleidenschaft gezogen werden und/oder Bereiche, die für die Statik der Kabine und/oder als Knautschzone besonders bedeutend sind. Zur Bestimmung dieser Bereiche können bevorzugt sowohl Unfallstatistiken, physikalische (Computer-) Analysen und/oder theoretische Berechnungen als auch Crashtests herangezogen werden. Dabei können Crashtests beispielsweise mit und ohne Deformationselement bzw. Sicherheitskabine zu Vergleichszwecken durchgeführt werden.

Diese Berücksichtigung von Crashtests und/oder theoretischen Überlegungen zur Identifikation geeigneter Bereiche (sicherheitsrelevanter Bereiche) für ein Deformationselement wird auch bevorzugt Analyse zur Festlegung sicherheitsrelevanter Bereiche genannt. Bei dieser Analyse sollen insbesondere Stabilität und/oder Umwandlungsfähigkeit untersucht werden.

Diese vorgenannten Eigenschaften, insbesondere Stabilität/Festigkeit und/oder Umwandlungsfähigkeit sollen eine Sicherheitskabine und/oder ein Deformationselement und dessen sicherheitsverstärkende Wirkung für ein Wohn- und/oder Reisemobil besonders charakterisieren. Bevorzugt umfasst die Bedeutung des Substantives "Sicherheit" bzw. des Adjektivs "sicher" in Verbindung mit eine Charakterisierung der Sicherheitskabine und/oder dem Deformationselement diese Eigenschaften.

Eine Erhöhung einer Festigkeit, bevorzugt einer Zugfestigkeit, Druckfestigkeit, Biegefestigkeit und/oder Biegezugfestigkeit der Sicherheitskabine kann insbesondere durch eine hohe Zugfestigkeit der zur Faserverstärkung verwendeten Fasern sowie durch ein hohes E-Modul erreicht werden. Diese Fasereigenschaften sind insbesondere entlang einer Faserlängsrichtung hoch. Durch Bündelung geeigneter Faser, Einbettung in eine geeignete Kunststoffmatrix und/oder die Ausrichtung der Fasern in mindestens eine Richtung können diese Fasereigenschaften auch die genannten Eigenschaften der Sicherheitskabine beeinflussen. Ebenso ist auch die Umwandlung von kinetischer Energie bevorzugt in Spannungsarbeit und/oder Verformungsarbeit bei einem zumindest teilweisen unelastischen Stoß der Sicherheitskabine, also einem Unfall des Wohn- bzw. Reisemobils durch die Fasern in vorgenannter Weise beeinflussbar. Die relevante Eigenschaft der Faser ist jedoch in diesem Fall bevorzugt die Bruchdehnung dieser Faser, das bedeutet insbesondere die relative Längendehnung einer Faser in Prozent (%), bevor es zu einem Bruch bzw. Riss kommt. Diese wird bevorzugt ebenfalls durch die Zähigkeit der Faser bestimmt und/oder beeinflusst. Ebenso kann bei der Umwandlung die teilweise Umwandlung kinetischer Energie in Reibungsarbeit bevorzugt sein.

Aber auch weitere Eigenschaften können bevorzugt sein zur Erhöhung der (Unfall-) Sicherheit, wie z. B eine niedrige Brennbarkeit und/oder Entflammbarkeit. Zur Beurteilung können beispielsweise der Flammpunkt, der Brennpunkt, und/oder die Zündtemperatur herangezogen werden.

Bevorzugt ist eine Sicherheitskabine und/oder ein Deformationselement schwer brennbar und/oder nach DIN EN 13501 bzw. DIN 4102 schwer entflammbar.

Dafür können eine Sicherheitskabine und/oder ein Deformationselement beispielsweise ein Flammschutzmittel und/oder schwer brennbare Materialien umfassen, wie z. B. bestimmte Fasermaterialien umfassen.

Durch Deformationselemente, welche in geeigneten Bereichen der Sicherheitskabine eingebracht vorliegen, kann die Unfallsicherheit bevorzugt synergistisch erhöht werden. Dabei ist das Deformationselement bevorzugt zusätzlich in eine bestehende Fahrgastzelle und/oder Karosserie eingebracht. Ebenso kann das Deformationselement jedoch auch ein Karosserie- oder Strukturbauteil der Sicherheitskabine sein.

Bevorzugt sind Deformationselemente auch nachrüstbar. So kann ohne großen Aufwand ein bereits hergestelltes Fahrzeug sicherer gemacht werden. Es werden Ressourcen gespart.

In einer bevorzugten Ausführungsform umfasst das Deformationselement ein Vlies, z. B. umfassend Kohlenstofffasern in eine Kunststoffmatrix. Dieses kann entweder beim Bau der Sicherheitskabine oder in einem Nachrüstprozess an geeigneter Stelle ein- bzw. angebracht werden. Das Ein- bzw. Anbringen kann, insbesondere bei einem Nachrüsten, durch automatisiertes oder manuelles Laminieren geschehen.

Ein Deformationselement kann vorzugsweise ein flächiges Element sein und/oder umfassen. Flächiges Element bedeutet bevorzugt, dass es im Wesentlichen eine Ausdehnung entlang zweier Dimensionen hat und insbesondere nur eine unwesentliche Ausdehnung in zu dieser Ebene senkrechten Richtung.

In einer bevorzugten Ausführungsform der Sicherheitskabine weist das Deformationselement eine Zugfestigkeit von mehr als 2000 MPa (Megapascal), bevorzugt mehr als 3000 MPa und insbesondere mehr als 3500 MPa auf. Es war überraschend, dass durch die offenbaren Zugfestigkeiten eine stark verbesserte Sicherheit der Kabine erreicht werden konnte. Somit ist das Deformationselement besonders stabil gegenüber Zugbelastungen. Diese spielen bei Unfällen eine große Rolle. So wird auf überraschende Weise die Sicherheit der ganzen Kabine erhöht, sogar in Bereichen, wo kein Deformationselement vorliegt. Dabei weiß ein Fachmann, dass Materialtabellen Eigenschaften wie Dichte, Zugfestigkeit und E-Modul auflisten und kann daher aus solchen Listen geeignete Materialien heraussuchen. Dabei kann es bevorzugt sein, dass die Materialeigenschaften, insbesondere Zugfestigkeit und/oder E-Modul, isotrope Eigenschaften sind. Ebenso kann es jedoch bevorzugt sein, dass diese Eigenschaften anisotrop sind und nur in mindestens eine bestimmte Richtung innerhalb des Materials vorliegen bzw. sich in verschiedene Richtungen innerhalb des Materials unterscheiden. So kann eine sehr individuelle Anpassung des Deformationselements vorgenommen werden, wofür bevorzugt eine Analyse zur Festlegung sicherheitsrelevanter Bereiche herangezogen wird.

Häufig ist es vor allem bei Deformationselementen umfassend kohlenstofffaserverstärkten Kunststoff so, dass insbesondere entlang einer Faserrichtung eine besonders hohe Zugfestigkeit und/oder ein E-Modul erreicht werden kann. Dies kann zur gezielten Beeinflussung der bevorzugt anisotropen Stabilität und/oder Umwandlungsfähigkeit verwendet werden. So können durch gezielt entlang bestimmter Richtungen verlegte Fasern die gewünschten Eigenschaften entlang dieser Richtung maßgeschneidert erreicht werden, insbesondere ohne dass eine große Gewichtszunahme durch die Fasern verursacht wird, wie sie bspw. durch im Wesentlichen isotrop verlegte Fasern auftreten würde. Die (anisotropen) Eigenschaften können bevorzugt auch durch einen Tensor beschrieben werden.

Es kann auch bevorzugt sein, dass Deformationselement über das E-Modul zu beschreiben, z. B. können für das im Wesentlichen verwendeten Material E-Module größer 50 GPa (Gigapascal), bevorzugt größer 90 GPa bevorzugt sein. Es kann ebenso bevorzugt sein, dass das E-Modul weniger als 90 GPa, besonders bevorzugt weniger als 50 GPa beträgt.

In einer weiteren, bevorzugten Ausführungsform der Erfindung weist die Faserverstärkung Fasern einer Zugfestigkeit von mindestens 2.700 MPa, bevorzugt mindestens 2.850 MPa, stärker bevorzugt mindestens 3.000 MPa, und insbesondere mindestens 3.500 MPa und/oder ein Elastizitätsmodul von mindestens 70 GPa, bevorzugt mindestens 100 GPa, stärker bevorzugt mindestens 230 GPa und insbesondere mindestens 370 GPa und/oder eine Bruchdehnung von mindestens 0,7 %, bevorzugt mindestens 1,5 %, stärker bevorzugt mindestens 2,7 % und insbesondere mindestens 3,5 % in eine Richtung auf. Auf diese Weise können die vorstehend genannten Eigenschaften besonders gut erreicht werden. Ein Fachmann weiß dabei, wie diese Eigenschaften zu erzielen sind, beispielsweise durch geeignetes Fasermaterial und/oder Faserdicken und/oder Anzahl der miteinander zu einem sogenannten Faserbündel und/oder Roving verbundenen Fasern.

Insbesondere die Zugfestigkeit und/oder das E-Modul bzw. der diese Eigenschaften beschreibende Tensor dienen bevorzugt der Charakterisierung der Stabilität und/oder Umwandlungsfähigkeit des Deformationselements. Vor allem die Umwandlungseigenschaften können durch eine Anisotropie der Stabilitätseigenschaften durch eine Vorzugsrichtung der Leitung der bei einem Unfall auf das Deformationselement übertragenen Energie positiv beeinflusst werden.

Es kann auch bevorzugt sein, das Deformationselement über die Dichte zu beschreiben. Beispielsweise kann eine Dichte des für das Deformationselement im Wesentlichen verwendeten Materials bevorzugt zwischen 1 und 2 g/cm³ betragen. So können besonders leichte Deformationselemente bereitgestellt werden, welche den Verbrauch eines Wohn- und/oder Reisemobils nicht signifikant erhöhen, nur geringe Energiekosten (Treibstoff) verursachen und die Umwelt schonen.

Begriffe wie im Wesentlichen, ungefähr, etwa, ca. etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1%. Ähnlich beschreibt bevorzugt Größen die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

Auch eine Flächendichte zur Beschreibung des im Wesentlichen verwendeten Materials kann bevorzugt sein. Z. B. kann für dieses Material eine Flächendichte zwischen 100 g/cm² und 300 g/cm² und insbesondere zwischen 200 g/cm² und 220 g/cm² bevorzugt sein. Bevorzugt sind die Deformationselemente im Wesentlichen flächig. Daher kann insbesondere die Flächendichte geeignet sein, besonders leichte Deformationselemente zu beschreiben, welche durch ihr geringes Gewicht leicht nachrüstbar sind, ohne das die Motorisierung und/oder Auslegung des Fahrwerks geändert werden müsste.

Ganz besonders bevorzugt ist ein Deformationselement, welches entweder die Kombination dieser bevorzugten Stabilitäts- und Dichteeigenschaften selber aufweist und/oder das im Wesentlichen umfasste Material. So kann ohne wesentliche Gewichtszunahme die Sicherheit der Kabine stark verbessert werden.

In einer bevorzugten Ausführungsform der Erfindung hat das Deformationselement eine Ausdehnung von mindestens 1 - 300 cm in eine Richtung. Ein Deformationselement kann innerhalb dieser Größenordnung viele bevorzugt unterschiedliche Ausdehnungen aufweisen, je nachdem, ob es sich z. B. um ein Element der Außenwand der Sicherheitskabine handelt (bevorzugte Größen 55 cm - 250 cm) oder um stabilisierende Einzelelemente, wie z. B. das Winkelelement (bevorzugte Größen 5 cm - 110 cm). Es war überraschend, das bei einem Deformationselement dieser Größen die Sicherheit entscheidend verbessert werden konnte.

Bevorzugt hat das Deformationselement, insbesondere ein flächiges Deformationselement, eine Fläche von weniger als 6 m². Außenwände weisen typischerweise Flächen im Bereich 2 m² bis 6 m² auf, während z. B. Winkelelemente eher 25 cm² bis 1,5 m² groß sind.

Ebenso kann bevorzugt sein, dass das (flächige) Deformationselement eine Dicke von weniger als 30 cm, bevorzugt weniger als 20 cm, stärker bevorzugt weniger als 10 cm, noch stärker bevorzugt weniger als 5 cm, ganz stark bevorzugt 2 cm oder weniger und insbesondere 1 cm oder weniger aufweist. Solche Elemente sind besonders leicht herzustellen.

In einer weiteren bevorzugten Ausführungsform der Sicherheitskabine umfasst das Deformationselement kohlenstofffaserverstärkten Kunststoff.

Ein kohlenstofffaserverstärkten Kunststoff ist dem Fachmann bekannt und umfasst bevorzugt Verstärkungsfasern aus Kohlenstoff und einer Kunststoffmatrix, welche die Fasern bettet. Mit Kunststoff ist vorteilhafterweise ein Werkstoff gemeint, welcher Polymere umfasst. Da die Fasern vorteilhafterweise eine höhere Steifigkeit als die Matrix aufweisen, wird einwirkende Last bzw. Kraft bevorzugt entlang der Fasern geleitet.

Eine Faser ist insbesondere ein lineares, längliches Gebilde, das aus einem Faserstoff besteht und eine Faserform aufweist, wobei die Längsform z. B. glatt oder kraus und die Querschnittsform beispielsweise rund oder eckig ist. Mit Fasern sind vor allem dünne Fäden von bevorzugt einigen Mikrometern Durchmesser bezeichnet. Aber auch dickere und/oder dünnere Fasern sind bekannt und können zum Einsatz kommen.

Eine Kohlenstoff-Faser kann beispielsweise graphitartig sp²-gebundenen Kohlenstoff umfassen. Bekannte und bevorzugte Kohlenstofffasertypen, bevorzugt auch als Carbonfasern bezeichnet, umfassen Fasern folgender Charakterisierungen: HT (High Tenacity) - hochfest, UHT (Ultra High Tenacity) - sehr hochfest, LM (Low Modulus), IM (Intermediate Modulus) - intermediate, HM (High Modulus) - hochsteif, UM (Ultra Modulus), UHM (Ultra High Modulus), UMS (Ultra Modulus Strength) und/oder HMS (High Modulus / High Strain) - hochsteif/hochfest. Diese Charakterisierungen entsprechen industriellen Standardbezeichnungen und sind dem Fachmann bekannt. So kann je nach Anforderung an Stabilität und/oder Umwandlungsfähigkeit eine geeignete Faser verwendet werden.

Die Fasermaterialien der Kohlenstofffasern sind bspw. ausgesucht aus der Gruppe umfassen Rayon/Viskose (Zellulose), Polyacrylnitril (PAN), Pech, Polyethylenoxid (PEO) und/oder Polyvinylalkohol (PVA). Diese eignen sich für eine einfache und günstige Herstellung.

Erfindungsgemäß sind die Kohlenstofffasern ausgesucht aus der Gruppe umfassend Zellulose allgemein, Flachs, Hanf-Fasern, Sisal und/oder Holz. Auf diese Weise können besonders ökologisch verträgliche Deformationselemente hergestellt werden, welche gleichzeitig die Energie bei einem Unfall besonders gut aufnehmen und geeignet weiterleiten können (Umwandlungsfähigkeit).

Vorteilhafterweise kann eine Kohlenstoffaser auch ausgeseucht sein aus einer Gruppe umfassend Aramid, Poly(p-phenylen-2,6-benzobisoxazol) (PPBO), Polyester, Nylon, Ultra-High-Molecular-Weight-Polyethylen, Polyethylen und/oder Polymethylmethacrylat. Fasern dieser Vorzugsvariante sind besonders vielseitig, robust und/oder stabil und besitzen beispielsweise eine hohe Temperatur- und/oder Chemikalienresistenz, eine niedrige Brennbarkeit und andere vorteilhafte Eigenschaften.

Der Kunststoff kann bevorzugt ein thermoplastisches, ein duroplastisches und/oder ein elastomeres Material umfassen. Thermoplasten sind leicht zu verarbeiten. Duroplasten sind bevorzugt auch unter hohen Temperaturen besonders stabil. Elastomere weisen insbesondere eine hohe Umwandlungsfähigkeit auf.

Der Kunststoff kann z. B. aus Harz und/oder Härter bestehen. Es können sowohl Kondensationsharze als auch Reaktionsharze verwendet werden, die im Unterschied zu ersteren in der Hauptsache ohne Abspaltung flüchtiger Komponenten, allein durch Polymerisation oder Polyaddition aushärten. Dadurch kann vorteilhafterweis eine Schädigung der Gesundheit von bei der Herstellung beteiligter Personen vermieden werden.

Unter Härter sind bevorzugt Materialien zu verstehen, die insbesondere gemeinsam mit dem verwendeten Harz zu einer Aushärtung zu einem festen Stoff, in erster Linie zu einem festen Kunststoff führen. Härter sind bevorzugt ausgewählt aus der Gruppe umfassend Polyamine, Aminaddukte, Polyaminoamide, Ketimine, Polyisocyanate, blockierte Isocyanate, Cyanguanidin, Amidine, Anhydride von Dicarbonsäuren, Carboxygruppen-haltige Polyesterharze, Dicarbonsäuren, Aldehyde, Ketone und/oder Divinylbenzole, Diallylphthalat und/oder Triglycidylisocyanurat. Diese sind besonders kostengünstig und leicht herzustellen.

Der Kunststoff und/oder Härter umfasst bevorzugt ein thermoplastisches Material und ist z. B. ausgesucht aus der Gruppe umfassend Polyetheretherketon (PEEK), Polyphenylensulfid (PPS), Polysulfon (PSU), Polyetherimid (PEI), Polytetrafluorethen (PTFE) verwendet. Ebenso können in erster Linie duroplastische Materialien wie Epoxidharz (EP), ungesättigtes Polyesterharz (UP), Vinylesterharz (VE), Phenol-Formaldehydharz (PF), Diallylphthalatharz (DAP), Methacrylatharz (MMA), Polyurethan (PUR), Melaminharz (MF/MP) und/oder Harnstoffharz (UF). Dabei wird bevorzugt ein geeigneter Härter verwendet.

Elastomere umfassen bevorzugt Polymere. Elastomere sind beispielsweise Vulkanisate von Naturkautschuk und/oder Silikonkautschuk.

Eine Herstellung von kohlenstofffaserverstärktem Kunststoff kann bevorzugt folgende Schritte und/oder Elemente umfassen: Verwendung von Prepregs im Press- oder Autoklavverfahren (besonders hochwertiger und verbesserter Kohlenstofffaserverstärkten Kunststoff), Faserwickeln, Infusions- oder RTM-Verfahren (besonders kostengünstige Herstellung). CFK-Handlaminate (besonders einfach und gut nachrüstbare Deformationselemente).

Kohlenstofffaserverstärkter Kunststoff ist für eine Erhöhung der Sicherheit besonders geeignet und lässt sich gut verarbeiten und vielfältigen Formen anpassen. Die Ästhetik kann so ebenfalls erhöht werden. Kohlenstofffaserverstärkten Kunststoff verbindet in einzigartiger Weise geringes Gewicht und hohe Stabilität (E-Modul, Zugfestigkeit). Nicht umsonst ist die Verwendung dieser Materialien ansonsten im Wesentlichen aus Luft- und Raumfahrt sowie der Antiballistik bekannt. Es war jedoch überraschend, dass eine Verwendung für eine Sicherheitskabine für ein Wohn- bzw. Reisemobil Stabilität und Sicherheit entscheiden verbessert, ohne Gewicht, Verbrauch und Fahreigenschaften signifikant (wesentlich) zu verändern.

Dabei ist besonders bevorzugt, geeignete/gewünschte Sicherheitseigenschaften durch eine fachmännische Ausrichtung und/oder Verlegung der Fasern zu erreichen. Diese orientiert sich insbesondere an der Analyse zur Festlegung sicherheitsrelevanter Bereiche.

Auch eine Nachrüstung von Deformationselementen in Form kohlenstofffaserverstärkter Kunststoffe ist besonders einfach, da diese häufig die Form von Matten aufweisen. Solche Matten können besonders einfach im Nachhinein in eine vorhandene Kabine an geeigneter Stelle eingebracht werden, z. B durch Laminieren.

Kohlenstofffaserverstärkter Kunststoff umfasst insbesondere eine Faserverstärkung in Form eines unidirektionalen und multiaxialen Geleges (bzw. Gewebes und/oder Vlies), welches insbesondere hochwertige Carbon-, Glas- und/oder Aramidfasern umfasst und mit Harz laminierbar ist. Ein solches ist vorteilhafterweise spätestens im laminierten Zustand hochfest, ultraleicht (Gewicht/Dichte), lässt sich bei einem Einbringen einfach drapieren, einfach verarbeiten und ist mit unterschiedlichsten Harzsystemen kompatibel.

Die Weiterverarbeitung kann insbesondere folgende Verfahren umfassen: Nasslaminieren, Pressen oder RTM (Resin Transfer Molding). Auch vorimprägnierte Materialien (Prepregs) sind bevorzugt.

In einer bevorzugten Ausführungsform umfasst der kohlenstofffaserverstärkte Kunststoff Aramide. Aramide sind bevorzugt Polyamide mit aromatischen Gruppen in der Hauptkette, bei denen mindestens 85 % der Amidgruppen direkt an zwei aromatische Ringe gebunden sind. Es können jedoch auch aromatische Polyamidimide umfasst sein. Bevorzugt sind Aramide ausgesucht aus der Gruppe umfassend meta-Aramide, para-Aramide und/oder para-Aramid-Copolymere. Aramide können Poly(p-phenylenterephthalamid) (PPTA, Handelsnamen: Kevlar, Twaron) und/oder Poly(m-phenylenisophthalamid) (PMPI, Handelsnamen: Nomex, Teijinconex) umfassen.

Besonders bevorzugt ist die Verwendung von Sigratex für das Deformationselement. Insbesondere ist die Verwendung von Sigratex H W215 -TW2/2 des Herstellers SGL Carbon bzw. gleichwertige Materialien anderer Hersteller bevorzugt, dass es überraschend gute Sicherheitseigenschaften aufweist. Diese können in Form von Gelegen, Geweben und/oder einem Vlies vorliegen und entsprechend bekannter und genannter Techniken in eine Sicherheitskabine eingebracht werden.

Bevorzugt können in den Faserverstärkungen einzelne, feinste Fasern zu sogenannten Rovings zusammengefasst werden. Ein Faserroving ist bevorzugt ein Bündel, Strang und/oder Garn aus parallel angeordneten Fasern. Die Anzahl der zusammengefassten Fasern wird dabei insbesondere mit der Filamentzahl angegeben, welche bevorzugt direkt dieser Anzahl entspricht. Einheiten von Tausend Fasern werden dabei bevorzugt mit k abgekürzt, 50.000 Fasern in einem Roving entsprechen somit insbesondere 50 k.

Die Feinheit wird bevorzugt in *tex* angegeben. tex entspricht insbesondere der Masse in Gramm pro tausend Meter Länge einer Faser bzw. eines Rovings. Durch die bevorzugten Parameter kann eine überraschend hohe Zugfestigkeit bzw. ein überraschend hohes E-Modul bei gleichzeitig geringem Gewicht und somit geringer Dichte erreicht werden. Die zu einem Roving zusammengefassten Fasern beeinflussen sich dabei synergistisch. Bevorzugt gilt für das Filament, (synonym: k-Zahl, Filamentanzahl) -je höher, desto stabiler die Faserverstärkung.

Es können bevorzugt Faserverstärkungen verwendet werden, die Gelege, Gewebe und/oder Vliese umfassen. Gelege sind bevorzugt nichtgewebte Matten aus parallelen Carbonfasern, die durch Verbindungsmittel in ihrer Lage fixiert werden. Diese können bevorzugt sowohl unidirektional als auch multiaxial sein, was insbesondere bedeutet, dass alle Fasern und alle umfassten Schichten in eine Richtung orientiert sind (unidirektional) oder mehrere Orientierungsrichtungen umfassen (multiaxial). Gewebe umfassen bevorzugt gewebte Fasern wie bei Textilien und können z. B. die Form von Matten und/oder Gewebebändern aufweisen. Bei Vliesen werden bevorzugt kurze Fasern (z. B. unter 10 cm) umfasst. Dabei können die Fasern bevorzugt "filzartig" miteinander verwebt sein. Es können bevorzugt isotrope Vliese (Faserrichtungen statistisch im Wesentlichen gleichverteilt) und/oder orientierte Vliese (Vorzugsrichtung der Fasern vorhanden) verwendet werden.

Bevorzugt können für alle genannten Faserverstärkungen verschiedene Fasertypen mit unterschiedlichen Eigenschaften eingesetzt werden, z. B.: Carbonfasern, bevorzugt umfassend HT-Fasern mit einer Filamentanzahl von 1.000 - 50.000, einer Zugfestigkeit von 3.500 MPa (Megapascal)oder höher, einem E-Modul von 230 GPa (Gigapascal) oder höher und/oder einer Bruchdehnung von 1,5% oder höher. Dabei gelten alle Eigenschaften bevorzugt pro Roving und/oder in Faserlängsrichtung. Ebenso können verwendete Carbonfasern bevorzugt HM-Fasern (Hochmodul) sein mit einer Filamentanzahl von 1.000 - 50.000, einer Zugfestigkeit von 2.700 MPa oder höher, einem E-Modul von 370 GPa oder höher und/oder einer Bruchdehnung von 0,7% oder höher. Ebenso können bevorzugt Aramidfasern umfasst sein, z. B. mit einer Feinheit von 80 - 400 tex, einer Zugfestigkeit von 2.850 MPa oder höher, einem E-Modul von 70 GPa oder höher und/oder einer Bruchdehnung von 3,4% oder höher (sogenanntes Standardmodul). Ebenso können die Aramidfasern bevorzugt Intermediate- und/oder Hochmodulfasern sein mit bevorzugt einer Feinheit von 40 - 400 tex, einer Zugfestigkeit von 2.850 MPa oder höher, einem E-Modul von 100 GPa oder höher und/oder einer Bruchdehnung von 2,7% oder höher. Ebenso können bevorzugt Glasfasern umfasst sein, bevorzugt E-Glas (bevorzugt Aluminiumborsilikat-Glas mit weniger als 2 % Alkalioxiden; welches standardmäßig für die allgemeine Kunststoffverstärkung verwendet wird), bevorzugt mit einer Feinheit von 30 - 3.500 tex, einer Zugfestigkeit von 3.000 MPa oder höher, einem E-Modul von 70 GPa oder höher und/oder einer Bruchdehnung von 3,5% oder höher. Bevorzugt können ebenfalls Mischtypen der genannten Fasertypen als Faserverstärkung verwendet werden.

Bevorzugt werden die Faserverstärkungen in Form von Gelegen, Geweben und/oder Vliesen durch folgende Eigenschaften charakterisiert: Materialauswahl (bevorzugt Carbon, Glas und/oder Aramid sowie Hybrid, also mehrere Typen umfassend; Gewebetyp (Unidirektional, Biaxial, Triaxial, Quadriaxial, Vlies, wobei Bi-, Tri- und Quadri- bevorzugt für zwei, drei und vier verschiedene Faserrichtungen stehen); Flächengewicht, angegeben in Gramm pro Quadratzentimeter (g/cm²); Bindungstyp bei Geweben, bevorzugt Leinwandbindung, Körperbindung (bevorzugt schräg verlaufender Grat, bevorzugte Typen 2/2, 4/4) und/oder Satinbindungen (auch als Atlasbindungen bekannt, bevorzugter Typ 1/7). Bevorzugte Faserorientierung sind: 0°(unidirektional), 0/90°, -45°/+45° (beide biaxial), 0°/-45°/+45°(triaxial), 0°/-45°/ 90°/+45°(Quadriaxial) bzw. bei Vliesen isotrop, anisotrop 0°, anisotrop -45°/+45°. Bevorzugte Fixierungen sind einseitige Gitter, zweiseitige Gitter, vernäht und/oder nicht fixiert. Des Weiteren können Bebinderung/Grammatur und/oder Kennfaden bei Vliesen umfasst sein. Herstellungs- bzw. Weiterverarbeitungsschritte der Faserverstärkungen können bevorzugt umfassen: Prepreg-Herstellung, Nasslaminieren, Infusion, Nasspressen und/oder Resin Transfer Molding (RTM).

Bei Geweben, Bändern und/oder Vliesen können als Materialbasis bevorzugt Carbonfasern mit 1k, 3k, 6k, 12k und 24k (Filamentanzahl) umfasst sein. Es können insbesondere gewebte Hybridmaterialien mit Glas- und/oder Aramidfasern verwendet werden. Diese bieten eine hohe Festigkeit, Steifigkeit und verbesserte thermische sowie elektrische Leitfähigkeiten. Sie sind vorteilhafterweise kompatibel mit verschiedenen Harzsystemen und sind dadurch besonders flexibel.

Es ist besonders bevorzugt, dass das Deformationselement und/oder die Faserverstärkung Carbon-Gelege umfasst. Carbon-Gelege sind insbesondere Gelege umfassend Carbonfasern. Carbongelege werden bevorzugt unidirektional und/oder biaxial zur Herstellung hochfester Bauteile im Motorsport, bei der Erzeugung von Windenergie, im Sportgerätebau sowie im Boots-, Schiffs- und/oder Flugzeugbau verwendet und umfassen insbesondere gestreckte (lange und/oder ausgerichtete) Fasern, welche in verschiedenen Lagen mit unterschiedlichen Faserausrichtungen abgelegt werden und z. B. mit einem Nähfaden verbunden werden. Dabei können Zug- und/oder Druckkräfte überraschend optimal durch die Fasern aufgenommen und/oder weitergeleitet werden. Gelege sind besonders bevorzugt für eine großindustrielle Herstellung, wo sie besonders einfach und kostensparend eingesetzt werden kann. Dabei kann z. B. bei der Herstellung ein sogenannter Autoklav verwendet werden, welcher sich bei großindustrieller Herstellung besonders rechnet und durch die Verarbeitung der Gewebe unter Vakuumbedingungen Lufteinschlüsse verhindert und so die Qualität hebt und Wartungen minimiert.

(Textile) Gelege umfassen insbesondere eine oder mehrere Lagen von Fasern in gleicher oder unterschiedlicher Orientierung (unidirektionale oder multiaxiale Gelege). Bevorzugt können die Fasern durch Fäden verbunden sein (auch Wirkfäden genannt). Durch die Ausrichtung der Fasern in gestreckter und/oder belastungsgerechter Form können Strukturdehnungen vermieden werden. Dadurch sind die mechanische Eigenschaften stark verbessert. Es können bevorzugt folgende Sticharten verwendet werden: Franse, versetzte Franse, Trikot, Doppeltrikot und/oder Hexagonalstich. Diese Gelege sind besonders praktisch in der Verarbeitung.

Unidirektionale Gelege umfassen bevorzugt Carbonfasern und Glasfasern. Eine Vernähung kann z. B. ein Polyestergarn umfassen bzw. durch eine ein- oder doppelseitige Gitterfixierung erfolgen. Es können unter Abwägung des Flächengewichts und/oder der Kosten mittlere bis hohe Filamentzahlen (Filamentanzahlen) umfasst sein. Solche Gelege sind überraschend vielfältig. Es können bevorzugt folgende Eigenschaften umfasst sein: Faserorientierung: 0 , +-45 °, 90 °; Gewicht Faserlage (g/m²): 154,, 226, 307, 451, 462, 614; Flächengewicht gesamt (g /m²): 80, 100, 125, 150, 179, 178, 181, 200, 253, 300, 332, 331, 338, 478, 492, 500, 600, 646; verschiedene Bindertypen, z. B. E214; Vernäht und/oder fixiert durch ein- und/oder zweiseitiges Gitter.

Bevorzugt werden biaxiale Carbonfaser-Gelege verwendet, umfassend Fasern (insbesondere Rovings) mit zwei Lagen mit zwei Orientierungen, z. B. ±45°. Durch die umfassten gestreckten Fasern weisen Gelege überraschend verbesserte mechanische Eigenschaften auf. Insbesondere bei Verwendung hochwertiger Carbonfasern mit z. B. 50.000 (50 k) Filamenten werden die gewünschten Sicherheitseigenschaften synergistisch verbessert. Solche Gelege können überraschend einfach bei der Herstellung gehandelt werden, sind insbesondere einfach durch ein Harz infusionierbar sowie verbessert drapierbar, dabei überraschend leicht, steif und fest. Diese Eigenschaften können mit einem überraschend geringen Material- und Herstellungseinsatz erreicht werden. Es können bevorzugt folgende Eigenschaften umfasst sein: Faserorientierung: +/-45 °; Gewicht Faserlage (g /m²): 154 pro Lage/Richtung, 154/307 (verschiedene Richtungen), 200 pro Lage, 300 pro Lage; Flächengewicht gesamt (g /m²): 318, 471, 415, 615; vernäht (E214).

Es können ebenso bevorzugt Carbon-Gewebe im Deformationselement bzw. der Faserverstärkung umfasst sein. Es können bevorzugt folgende Eigenschaften umfasst sein: Materialien und Eigenschaften: Carbon-Glas-Gewebe und/oder Carbon-Aramid-Gewebe in HAT (Hochfest) und/oder HM (Hochmodul); Flächengewicht (g /m²): 80, 95, 120, 135, 160, 170,175, 200, 205, 215, 245, 285, 300, 305, 365, 400, 410, 425, 500, 620, 665, 830; Garnfeinheit Kette/Schuss (tex): 70, 200, 400, 800, 1600, 225, 200, 200 Carbon/160 Aramid; Bindungstyp: Leinwand, Körper 2/2, 4/4 Satin 1/7.

Es können bevorzugt ebenso schmale (Größenordnung bevorzugt cm) Gewebebänder vom Deformationselement und/oder dessen Faserverstärkung umfasst sein, bevorzugt mit folgenden Eigenschaften: unidirektional; Leinwandbindung, bevorzugt mit Bindekette/Glashilfskette; Flächengewicht (g /m²): 140, 200, 210, 270, 280, 285, 290, 330, 360, 365, 370; Breite (cm): 5, 6,5, 7, 7,5, 4,5, 2,5, 3,5, 10, 12, 16. Durch Gewebebänder kann eine besonders flexible Verstärkung und Erhöhung der Sicherheit, z. B. an besonders neuralgischen Stellen erreicht werden, wie. Z. B. in Eckbereichen der Sicherheitskabine.

Bevorzugt können Carbon-Vliese im Deformationselement bzw. der Faserverstärkung umfasst sein. Vliese aus Carbonfasern sind sehr leicht verarbeitbar und eignen sich überraschend für eine Prepregherstellung. Isotrope Vliese umfassen bevorzugt gleichmäßig verteilte Fasern mit einer bevorzugten durchschnittlichen Faserlänge von etwa 40 mm. Diese sind besonders kostengünstig. Orientierte Vliese umfassen bevorzugt anisotrop ausgerichtete Fasern mit einer bevorzugten durchschnittlichen Faserlänge von etwa 60 mm. Orientierte Vliese können insbesondere in definierten Carbonfaser-Vlieskomplexen umfasst sein. Durch die Lagenstruktur und die Orientierung können die mechanischen Eigenschaften überraschend verbessert werden. Es können bevorzugt folgende Eigenschaften für ein Isotropes Carbonfaser-Vlies umfasst sein: Anteil Carbonfaser/Glasfaser/Polymerfaser (g /m²): 410/13/27 (= 450 Gesamt), 469/13,48 (= 530 Gesamt). Es können bevorzugt folgende Eigenschaften für ein Orientiertes Carbonfaser-Vlies umfasst sein: Anteil Carbonfaser/Glasfaser/Polymerfaser (g /m²): 75/9/12 (= 96 Gesamt). Bevorzugte Eigenschaften eines Carbonfaser-Vlieskomplexes sind: Orientierung Vlieslagen: 0, +-45 °; Anteil Carbonfaser/Glasfaser/Polymerfaser (g /m²): 150/26/19 (= 205 Gesamt mit Binder), 300/35/57 (= 402 Gesamt mit Binder).

Bevorzugt können ebenso Carbonfaser-Nassvliese umfasst sein. Diese weisen bevorzugt folgende Eigenschaften auf: Flächengewicht (g /m²): 20, 30; Faserlänge (mm): 6/12, Reißfestigkeit: N/15 mm; Binderart: Polyester styrollöslich, Polyvinylalkohol. Nassvliese sind besonders einfach zu verarbeiten und ressourcenschonend.

Bei allen Faserverstärkungen können bevorzugt recycelte Fasern umfasst sein.

Eine Sicherheitskabine umfassend faserverstärkte Deformationselemente, bevorzugt aus CFK, kann beispielhaft wie folgt hergestellt werden: es wird ein kohlenstofffaserverstärkter Kunststoff (CFK) verwendet umfassend Karbonfasern umfassend eine thermoplastische Textilfaser aus Polyacrylnitril. Diese wird bevorzugt aufgespalten zu einer dünnen Faser (ca. 7 Mikrometer {µm}) umfassend im Wesentlichen reinen Kohlenstoff. Etwa 50.000 Fasern werden bevorzugt zu einem Roving zusammengefasst. Die Rovings werden dann bevorzugt weiterverarbeitet zu textilen Gelegen. Dabei können insbesondere mehrere Lagen Gelege verschiedener Ausrichtungen in unterschiedlichen Orientierungen in Stapeln bzw. Stacks umfasst sein, welche bevorzugt zugeschnitten sind/werden. Diese Stacks können nun von Teile der Sicherheitskabine (Deformationselemente) umfasst sein. Dabei kann bevorzugt durch Zuführung von Wärme eine weitere individuelle Formgebung ermöglicht und/oder die Stabilität erhöht werden. Ein Zusammenfügen mehrerer der vorgeformten, bevorzugt Preform-Rohlinge genannten Teile zu einem größeren Bauteil ist bevorzugt. Dadurch kann ein Aufwand bei der Herstellung großflächige Bauteile der Sicherheitskabine überraschend verbessert werden. In einem nächsten Schritt wird bevorzugt durch ein RTM-Verfahren (Resin Transfer Moulding) Harz unter hohen Druck eingebracht bzw. injiziert (Druck bevorzugt mehr als 1 bar, stärker bevorzugt mehr als 10 bar und insbesondere 50 bar oder mehr), z. B. in einer geeigneten Form. Dadurch kann die Steifigkeit überraschend verbessert werden. Die entstandenen CFK Elemente werden dann bevorzugt zu einer Sicherheitskabine bzw. einer von dieser umfassten Grundstruktur umfassend Deformationselemente zusammengefügt. Es können vorteilhafterweise durch die beschriebene Herstellung komplexer und bevorzugt großflächiger Teile mit einer verbesserten geometrischen Integration überraschend viele Bauteile und somit Gewicht im Vergleich zu einer herkömmlichen Kabine eines Wohn- bzw. Reisemobils eingespart werden. Bevorzugt werden die CFK Elemente durch Kleben gefügt, wodurch die Festigkeit verbessert und Gewicht eingespart werden kann. Bei der Herstellung der Sicherheitskabine wie beschrieben kann Gewicht gespart werden (bei erhöhter Sicherheit) und somit Ressourcen geschont werden. Ebenso sind die verwendeten Elemente bevorzugt korrosionsfrei, wodurch die Sicherheitskabine besonders wartungsarm und langlebig ist. Auch sind die Elemente bevorzugt besonders unempfindlich gegenüber leichten Stößen. Die Elemente können bevorzugt weiter lackiert werden, um den äußeren Bereich der Kabine zu bilden und die Ästhetik zu heben. Dabei kann vorteilhafterweise aufgrund des nicht benötigten Korrosionsschutzes weniger Lack verwendet werden und dieser energiesparender aufgetragen werden. Dies schont Umwelt und Ressourcen.

Generell wird die Anzahl der bevorzugten Lagen einer Faserverstärkung mithilfe der sogenannten Laminattheorie berechnet. So kann eine bevorzugte Festigkeit und eine Umwandlung von kinetischer Energie durch ein faserverstärktes Deformationselement besonders einfach berechnet werden.

Bevorzugt weisen einzelne Lagen dabei eine Dicke < 1mm auf. Somit kann Gewicht gespart werden. Besonders bevorzugt ist die Dicke einzelner Lagen in etwa 0,2mm. Solche Lagen sind besonders platzsparend und ökonomisch.

In einer bevorzugten Ausführungsform ist die Faserverstärkung ausgesucht aus der Gruppe umfassend Kohlenstofffasern, Aramidfasern und/oder Glasfasern. Diese sind besonders wartungsarm, robust und leicht. Elemente mit solchen Faserverstärkungen sind bevorzugt 3 - 6 - mal, insbesondere 5,4-mal stabiler als ein Stahlelement gleichen Gewichts. Insbesondere ist die Feinstaubentwicklung bei der Herstellung und Verwendung von CFK unproblematisch, die Gesundheit der beteiligten Arbeiter und die Umwelt werden geschont.

In einer bevorzugten Ausführungsform wird für eine Matrixbildung für die Faserverstärkungen für einen faserverstärkten Kunststoff ein Polyesterharz verwendet. Dieser ist besonders kostengünstig. Insbesondere wird Epoxidharz verwendet, dieser ist besonders leistungsstark und bildet verbesserte Bauteile.

In einer bevorzugten Ausführungsform umfasst die Faserverstärkung Faserrovings, wobei die Faserrovings eine Filamentzahl zwischen 1.000 und 50.000 und/oder eine Feinheit zwischen 30 und 3.500 tex, bevorzugt zwischen 40 und 400 tex aufweisen. Auf diese Weise können die bevorzugten Sicherheitseigenschaften besonders einfach erreicht werden.

In einer weiteren bevorzugten Ausführungsform der Sicherheitskabine kann das Deformationselement glasfaserverstärkten Kunststoff umfassen. Dieser ist besonders kostengünstig.

Erfindungsgemäß umfasst das Deformationselement eine gemischte Faserverstärkung mit einem Gewichtsanteil von Aramidfasern zwischen 10 %- 90 %, bevorzugt zwischen 20 % - 80 %, besonders bevorzugt zwischen 30 % - 70 %, stärker bevorzugt zwischen 40 % und 60 % und insbesondere etwa 50 %, wobei darüber hinaus Kohlenstofffasern umfasst sind. Es war äußerst überraschend, dass ein solches Deformationselement verbesserte Sicherheitseigenschaften aufweist, ohne zusätzliches Gewicht zu verursachen. Dadurch können Ressourcen geschont werden, außerdem ergibt sich in Kombination mit der ebenfalls überraschenden Wartungsfreiheit eine Kostenersparnis.

In einer weiteren bevorzugten Ausführungsform umfasst das Deformationselement ein CarbonGelege. Dadurch kann die Qualität gehoben werden.

In einer weiteren bevorzugten Ausführungsform der Erfindung umfasst der äußere Bereich der Sicherheitskabine mindestens ein Deformationselement umfassend eine Lage eines kohlenstoffund/oder aramidfaserverstärkten Kunststoffgewebes und/oder -geleges. So können die hervorragenden Sicherheits- und Gewichtseigenschaften dieser Elemente besonders einfach genutzt werden.

In einer weiteren bevorzugten Ausführungsform der Erfindung umfasst der äußere Bereich der Sicherheitskabine mindestens ein Deformationselement umfassend zwischen 1 und 20, bevorzugt 3 - 8 Lagen eines kohlenstoff- und/oder aramidfaserverstärkten Kunststoffgewebes und/oder -geleges. So können überraschend flexible Deformationselemente gebildet werden. Bevorzugt ist dabei insbesondere, dass verschiedene Lagen mindestens zwei verschiedene Orientierungen der Fasern und/oder Faserrovings umfassen. So kann die Sicherheit überraschend gesteigert werden.

In einer weiteren bevorzugten Ausführungsform der Erfindung umfasst der äußere Bereich der Sicherheitskabine mindestens ein Deformationselement umfassend mindestens eine Lage glasfaserverstärkten Kunststoffs (GFK) mit einer Dicke zwischen 1 und 10 mm, bevorzugt zwischen 1 und 5 mm. Bevorzugt sind bei den bevorzugten Dicken mehr als eine Lage GFK umfasst. Dadurch kann bevorzugt nicht nur die Sicherheit auch gegenüber Bagatellunfällen durch Bereitstellung einer größeren Knautschzone verbessert werden, sondern überraschenderweise ebenfalls der Komfort der Sicherheitskabine durch bessere Schall- bzw. thermische Dämmung. Der Fachmann weiß, dass es in den Eckbereichen der Kabine, in denen bevorzugt faserverstärkte Lagen zur Verbesserung der Stabilität und/oder Festigkeit überlappen, zu erhöhten Dicken als den bevorzugten kommen kann.

In einer weiteren bevorzugten Ausführungsform der Erfindung umfasst ein vorderer (Passagier-) Bereich der Kabine 2 bis 5-mal so viele Lagen eines kohlenstoff- und/oder aramidfaserverstärkten Kunststoffgewebes und/oder -geleges wie ein hinterer Bereich, wobei bevorzugt ein vorderer Bereich 2-10 Lagen, insbesondere 5 Lagen und ein hinterer Bereich 1 - 2 Lagen, insbesondere 2 Lagen eines kohlenstoff- und/oder aramidfaserverstärkten Kunststoffgewebes und/oder -geleges umfasst. In einem vorderen Bereich der Kabine halten sich bevorzugt während der Fahrt die Passagiere auf, dort sind insbesondere die Sitzplätze installiert. In einem hinteren Bereich ist bevorzugt die funktionelle Ausstattung des Wohn- bzw. Reisemobils, insbesondere Bad und/oder Küche umfasst. Es ist dabei vorteilhaft, den hinteren Bereich dabei fest bzw. stabil zu konstruieren, jedoch weniger als einen vorderen Passagierbereich, so dass der hintere Bereich, insbesondere bei Auffahrunfällen eine Knautschzone bzw. "Opferanode" bildet, welche Aufprallenergie aufnehmen und umwandeln kann, so dass bei den Passagieren weniger kinetische Aufprallenergie ankommt. Diese sind dabei selber durch die Verwendung mehrerer Lagen wie in einem "Sicherheitskäfig" geschützt. Dabei kommt es neben den vorteilhaften Sicherheitseigenschaften vorteilhafterweise auch zu einer Gewichtsersparnis der Sicherheitskabine, die Ressourcen und Kosten spart.

In einer weiteren bevorzugten Ausführungsform der Erfindung umfasst der äußere Bereich der Sicherheitskabine einen Schaumstoff. Ein Schaumstoff kann z. B ein extrudiertes Polystyrol in Form eines Hartschaums sein, aber auch andere schäumende Materialien umfassen, bspw. Polyole und Polyisocyanate, aus denen in einer Polyadditionsreaktion Schaumstoff aus Polyurethane (PUR) entsteht. Es war überraschend, dass durch die Verwendung von Schaumstoff in dem äußeren Bereich einer Sicherheitskabine nicht durch deren Komforteigenschaften durch thermische und/oder Schalldämmung verbessert werden konnte, sondern auch die Sicherheitseigenschaften, insbesondere durch Bereitstellung einer Knautschzone und/oder einer Schicht, welche die Energie eines Aufpralls bei einem Unfall umwandeln kann in für Passagiere ungefährlichere Energieformen.

In einer bevorzugten Ausführungsform der Erfindung wird ein faserverstärkter Kunststoff (bevorzugt ein Deformationselement) im Bereich einer Fahrzeugsäule der Sicherheitskabine und/oder des Wohn- bzw. Reisemobils eingebracht, insbesondere im Bereich einer A-, B-, Cund/oder D-Säule. So kann die Stabilität überraschend effektiv erhöht werden.

In einer bevorzugten Ausführungsform umfasst das mindestens eine Deformationselement mindestens ein stabilisierendes Winkelelement, bevorzugt in einem Eckbereich der Sicherheitskabine. Ein Winkelelement kann z.B. mindestens zwei flächige Elemente umfassen, welche in einem Winkel zueinander stehen. Ein Winkelelement kann ebenso bevorzugt ein Dreieck umfassen, welches z. B. im Inneren der Kabine in eine rechtwinklige Ecke dieser zu Stabilisierungszwecken eingefügt wird, wobei bspw. zwei Seiten des Dreiecks an den die Ecke bildenden Innenflächen der Kabine anliegen und diese beiden Flächen dadurch stabilisieren. Es können ebenso andere geeignete, mehreckige Formen verwendet werden (Viereck, Fünfeck, Sechseck, Kreisausschnitt, etc.), welche sich insbesondere zur Stabilisierung einer Kabinenecke eignen. Das Winkelelement und insbesondere der Winkel können bevorzugt geometrischen Gegebenheiten des Aufbaus/der Kabine des Wohn- bzw. Reisemobils angepasst sein, um an geeigneter Stelle eingebracht vorzuliegen. Solche Winkelelemente können z. B. in den Ecken der Kabine vorhanden sein, um die Stabilität und die Sicherheitseigenschaften entscheiden zu verbessern. Sie können jedoch auch in anderen geeigneten Bereichen bevorzugt vorliegen. Dabei war es überraschend, dass insbesondere solche Winkelelemente die Stabilität und Sicherheit in einem Ausmaß erhöhen, welches allein durch die Eigenschaften des Winkelelements selber nicht zu erwarten war (synergistisch). Es hat sich ebenso überraschenderweise herausgestellt, dass insbesondere Winkelelemente in einem Eckbereich der Sicherheitskabine die (Unfall-) Sicherheit (synergistisch) erhöhen.

In einer weiteren bevorzugten Ausführungsform der Erfindung umfasst der äußere Bereich der Sicherheitskabine mindestens ein Deformationselement umfassend zwischen 1 und 20, bevorzugt 3 - 8 Lagen eines kohlenstoff- und/oder aramidfaserverstärkten Kunststoffgewebes und/oder -geleges und mindestens eine Lage glasfaserverstärkten Kunststoffs mit einer Dicke zwischen 1 und 10 mm, bevorzugt zwischen 1 und 5 mm. Durch diese Kombination aus Lagen verschiedener Glasfaserverstärkungen ergeben sich bezüglich der Stabilität und Umwandlungsfähigkeit, also bezüglich der Sicherheit synergistische Effekte aus den jeweiligen Sicherheitseffekten der verschiedenen Gewebe- und/oder Gelegearten.

In einer weiteren bevorzugten Ausführungsform der Erfindung umfasst der äußere Bereich der Sicherheitskabine mindestens ein Deformationselement umfassend zwischen 1 und 20, bevorzugt 3 - 8 Lagen eines kohlenstoff- und/oder aramidfaserverstärkten Kunststoffgewebes und/oder -geleges und einen Schaumstoff. Es war überraschend, dass durch die Verwendung eines Schaumstoffs fehlerhafte Bereiche des Gewebes bzw. Geleges kompensiert und somit Fehler behoben werden konnten

In einer weiteren bevorzugten Ausführungsform der Erfindung umfasst der äußere Bereich der Sicherheitskabine mindestens ein Deformationselement umfassend zwischen 1 und 20, bevorzugt 3 - 8 Lagen eines kohlenstoff- und/oder aramidfaserverstärkten Kunststoffgewebes und/oder -geleges, mindestens eine Lage glasfaserverstärkten Kunststoffs mit einer Dicke zwischen 1 und 10 mm, bevorzugt zwischen 1 und 5 mm, mindestens eine Lage glasfaserverstärkten Kunststoffs mit einer Dicke zwischen 1 und 10 mm, bevorzugt zwischen 1 und 5 mm und einen Schaumstoff, wobei bevorzugt ein vorderer Bereich der Kabine 2 bis 5-mal so viele Lagen eines kohlenstoff- und/oder aramidfaserverstärkten Kunststoffgewebes umfasst wie ein hinterer Teil, wobei bevorzugt ein vorderer Teil 2-10 Lagen, insbesondere 5 Lagen und ein hinterer Teil 1 - 2 Lagen, insbesondere 2 Lagen eines kohlenstoff- und/oder aramidfaserverstärkten Kunststoffgewebes umfasst. Durch die Kombination dieser Materialien und/oder Lagen konnte die Sicherheit überraschend verbessert werden. Dabei ergänzen sich die Eigenschaften dieser Materialien auf überraschende Weise, diese Kombination erhöht die Zuverlässigkeit der Kabine und stellt einen glücklichen Griff dar. Durch die bevorzugte Verwendung von unterschiedlichen Anzahlen von Lagen vorne und hinten an der Sicherheitskabine kann insbesondere in einem hinteren Teil der Sicherheitskabine eine überraschend verbesserte Knautsch- bzw. Deformationszone bereitgestellt werden.

In einer weiteren bevorzugten Ausführungsform der Erfindung umfasst der äußere Bereich der Sicherheitskabine mindestens ein Deformationselement umfassend zwischen 1 und 20, bevorzugt 3 - 8 Lagen eines kohlenstoff- und/oder aramidfaserverstärkten Kunststoffgewebes und ein stabilisierendes Winkelelement, bevorzugt in einem Eckbereich der Sicherheitskabine. Die Lagen des Kunststoffgewebes und das Winkelelement erhöhen die Festigkeit überraschend und synergistisch, also über das zu erwartende Maß hinaus.

In einer weiteren bevorzugten Ausführungsform der Erfindung weist die Sicherheitskabine quer zur Fahrtrichtung mindestens einen Querträger auf, welcher bevorzugt mindestens ein stabilisierendes Deformationselement umfasst. Bevorzugt umfasst der Querträger faserverstärkten Kunststoff, insbesondere umfasst die Faserverstärkung Kohlenstofffasern, Aramidfasern und/oder Glasfasern. Diese Querträger können die Stabilität der Kabine überraschend erhöhen, ohne selber viel Gewicht beizutragen. Insbesondere bei Unfällen mit Seitenaufprall auf die Kabine, können diese die an der Seite üblicherweise geringeren Knautsch- bzw. Deformationszonen kompensieren, dass sie ein im Wesentlichen durchgängiges Querelement darstellen, welches kinetische Energie in Spannungsenergie und Verformungsenergie umwandeln. Dabei kann der Querträger bevorzugt in einem Bodenbereich der Kabine, in der Nähe des Fahrgestells untergebracht sein. Ein solcher Querträger ist besonders platzsparend. Bevorzugt kann sich der Querträger ebenso vor und/oder hinter den Fahrgästen befinden. Ein solcher Querträger weist eine verbesserte Effektivität auf. Bevorzugt ist der Querträger mit dem Fahrgestell und/oder der restlichen Sicherheitskabine verbindbar.

In einer weiteren bevorzugten Ausführungsform der Erfindung weist die Sicherheitskabine längs zur Fahrtrichtung vor und/oder hinter den Fahrgästen mindestens einen Längsträger auf, welcher bevorzugt mindestens ein stabilisierendes Deformationselement umfasst. Bevorzugt umfasst der Querträger faserverstärkten Kunststoff, insbesondere umfasst die Faserverstärkung Kohlenstofffasern, Aramidfasern und/oder Glasfasern. Es war überraschend, dass nicht nur die Sicherheit der gesamten Kabine durch einen solchen Längsträger erhöht werden kann, sondern auch die Fahreigenschaften deutlich verbessert sind aufgrund einer bevorzugt höheren Steifigkeit des Fahrgestells und/oder gesamten Fahrzeugs. Dabei kann der Längsträger bevorzugt in einem Bodenbereich der Kabine, in der Nähe des Fahrgestells untergebracht sein. Ein solcher Längsträger ist besonders platzsparend. Bevorzugt kann sich der Längsträger ebenso vor und/oder hinter den Fahrgästen befinden. Ein solcher Längsträger weist eine verbesserte Effektivität auf. Bevorzugt ist der Querträger mit dem Fahrgestell und/oder der restlichen Sicherheitskabine verbindbar.

In einer beispielhaften Form der Sicherheitskabine wird bevorzugt die ganze Kabine mit faserverstärkten Lagen, bevorzugt aus Sigratex, laminiert. Beispielsweise kann der Aufbau von außen nach innen wie folgt aufgebaut werden:
2-3 mm Glasfaserverstärkter Kunststoff (GFK), dann 1-4 Lagen Aramid- und/oder Carbonfaserverstärkter Kunststoff (bevorzugt Sigratex), dann 30 mm Schaum (bevorzugt XPS), dann wieder Aramid- und/oder Carbonfaserverstärkter Kunststoff (bevorzugt Sigratex) und abschließend 1-2 mm GFK. Die Anzahl der Lagen soll in dem Bereich, wo sich die Passagiere sitzend aufhalten (bevorzugt vorne), bevorzugt höher sein.

Der Aufbau im hinteren Nicht-Sitz-Bereich wird bevorzugt weniger stark gebaut, so dass sich die hintere Hälfte des Aufbaus durch z. B. nur eine Lage CFK als "Opferanode" vulgo Deformationselement darstellt. Im Boden der Kabine kommen längs zur Fahrtrichtung bevorzugt zwei Carbon-Rechteckträger zum Einsatz, die einerseits die Kabine mit dem Fahrgestell verbinden, andererseits aber auch als Deformationselement dienen. Quer zur Fahrtrichtung gibt es bevorzugt im Bereich der Kabine auch 2-4 Carbon-Rechteckträger, um einen Seitenaufprall abzufangen.

In einer bevorzugten Ausführungsform weist der Innenraum der Sicherheitskabine mindestens eine Unterteilung in Querrichtung auf, welche ebenfalls mindestens ein stabilisierendes Deformationselement umfasst. Die Querrichtung ist insbesondere definiert als quer zur Fahrtrichtung. Bevorzugt umfasst die Unterteilung einen faserverstärkten Kunststoff, insbesondere umfasst die Faserverstärkung Kohlenstofffasern, Aramidfasern und/oder Glasfasern. Durch solch eine Unterteilung können insbesondere Insassen vor umherfliegenden Ausrüstungsgegenständen geschützt werden. Die Unterteilung des Innenraums kann dabei bevorzugt durchgängig oder teilweise sein. Dabei ist insbesondere bevorzugt, dass im hinteren Bereich des unterteilten Raumes Funktionsräume, wie z. B. die Küche vorliegen, welche viele Ausrüstungsgegenstände aufweisen. Vorne ist bevorzugt Wohnraum und insbesondere der Passagierbereich während der Fahrt. So kann insbesondere dieser Bereich bei Auffahrunfällen und/oder Vollbremsungen vor umherfliegenden Gegenständen geschützt werden. Überraschenderweise konnte durch so eine Unterteilung die Stabilität und Sicherheit der ganzen Kabine ebenfalls verbessert werden, insbesondere bei einwirkenden Kräften während eines Unfalls, welche Kraftkomponenten entlang der Richtung der Unterteilung aufweisen.

Bevorzugt weist die Unterteilung eine Tür auf. Weiterhin ist bevorzugt, dass diese die Unterteilung in das Äußere der Sicherheitskabine durch die Verwendung von Winkelelementen integriert wird. Z. B. kann die Unterteilung durch Winkelelemente mit den Außenwänden und oder dem Chassis/Fahrgestell verbunden werde.

Die Unterteilung kann dabei bevorzugt aus kohlenstofffaserverstärktem Kunststoff bestehen bzw. diesen umfassen. Somit kann die Unterteilung selber ein Deformationselement sein. Eine solche Unterteilung ist besonders leicht und stabil. Ebenso kann diese einfach und kostengünstig nachgerüstet werden und dabei die Sicherheit in überraschendem Maße erhöhen.

Die Unterteilung umfasst bevorzugt Winkelelemente, insbesondere an Verbindungsstellen mit den Außenwänden der Sicherheitskabine. Dadurch kann die Sicherheit synergistisch erhöht werden.

In einer weiteren bevorzugten Ausführungsform weist der Innenraumbereich der Sicherheitskabine mindestens einen entgegen der Fahrtrichtung installierten Sitzbereich auf. Unter anderem bei Crashtests hat sich herausgestellt, dass solche Sitzbereiche insbesondere minderjährigen Insassen einen hohen Schutz bieten. So können meist minderjährige Passagiere bei Auffahrunfällen und/oder Vollbremsungen besonders gut vor Verletzungen, insbesondere des Halswirbelbereichs, geschützt werden.

Die Sitzbereiche können dabei besonders bevorzugt durch Verwendung von Winkelelementen und/oder einem Sockel mit der Sicherheitskabine und/oder dem Fahrgestell eines Wohn- bzw. Reisemobils in Verbindung gebracht werden. So kann eine besonders stabile Verankerung des Sitzbereiches innerhalb des Wohnmobils und/oder Reisemobils gewährleistet werden.

In einer weiteren bevorzugten Ausführungsform weist die Sicherheitskabine zwischen Fahrerhaus und Innenraumbereich mindestens ein quer zur Fahrtrichtung eingezogenes Deformationselement auf. Dieses umfasst bevorzugt faserverstärkten Kunststoff, insbesondere umfasst die Faserverstärkung Kohlenstofffasern, Aramidfasern und/oder Glasfasern. Oftmals kommt es insbesondere bei Auffahrunfällen zu einem gefährlichen Abknicken des Fahrerhauses bzw. der Fahrerkabine. Dies kann auf diese Weise besonderes einfach verhindert und die Sicherheit erhöht werden. Bevorzugt kommen auch Winkelelemente zum Einsatz. Ein Deformationselement umfasst beispielsweise ein in Bereichen zwischen Fahrerhaus und Innenraumbereich quer zur Fahrtrichtung eingezogenes flächiges Element, welches bevorzugt durch mindestens ein Winkelelement mit dem Fahrgestell und/oder mindestens einer Außenwand der Sicherheitskabine zur Erhöhung der Stabilität verbunden wird. Dadurch kann überraschenderweise ein Abknicken besonders einfach vermieden werden. Auch eine Verbindung des Fahrerhauses mit dem Fahrgestell und/oder einer Außenwand der Sicherheitskabine durch ein Winkelelement ist als Maßnahme vorstellbar. Es war überraschend, dass durch die einfache Verwendung mindestens eines Deformationselements zwischen Fahrerhaus und Innenraumbereich die Sicherheit entscheiden erhöht und ein Abknicken verhindert werden kann. Dabei war insbesondere überraschend, dass bereits die Verwendung kleiner Deformationselemente, welche Gewicht, Raumangebot und/oder Funktionalität des Wohn- bzw. Reisemobils im Wesentlichen unverändert lassen, ausreichend ist, um gewünschte Effekte zu erzielen. Diese können auch besonders einfach nachgerüstet werden.

In einer weiteren bevorzugten Ausführungsform umfassen die Längs- und Querseiten der Sicherheitskabine Aluminium-Rundrohre und/oder Vierkantprofilen und/oder Plattenwerkstoffe, welche in Längs- und Kreuzbauweise miteinander verschweißt und/oder verklebt und/oder anderweitig stabil verbunden werden. Dadurch kann ein möglichst weitreichender Schutz der Insassen bei einem Unfall gewährleistet werden.

In einer weiteren bevorzugten Ausführungsform weisen die Aluminium-Rundrohre und/oder Vierkantprofilen und/oder Plattenwerkstoffe mindestens ein Deformationselement auf. Dabei können die Aluminium-Rundrohre, Vierkantprofile und/oder Plattenwerkstoffe selber Deformationselemente sein und/oder solche umfassen. Das kann z. B. auch bedeuten, dass die vorgenannten Elemente an geeigneten Stellen verstärkt werden, insbesondere durch kohlenstofffaserverstärkten Kunststoff. So kann die Sicherheit synergistisch erhöht werden. Auch ist die Verarbeitung besonders einfach und die Herstellungskosten sind günstig.

In einer weiteren bevorzugten Ausführungsform weist die Sicherheitskabine quer zur Fahrtrichtung vor und hinter den Fahrgästen Querträger auf, welche bevorzugt mindestens ein stabilisierendes Deformationselement umfassen. Dabei kann der Querträger bevorzugt auch selber ein Deformationselement sein. Hierdurch kann weitere Stabilität in den konstruktiven Aufbau gebracht werden. Es war dabei überraschend, dass solche Querträger die Sicherheit synergistisch erhöhen.

In einer weiteren bevorzugten Ausführungsform weisen die Rohre, Profile, Platten, Deformationselemente und/oder Querträger Wandstärken zwischen 1 mm und 100 mm und/oder in mindestens eine Richtung eine Länge zwischen 1 cm und 30 Metern auf. Diese Parameter haben sich zur Erhöhung der Stabilität als überraschend geeignet erwiesen und sind leicht herzustellen.

In einer weiteren bevorzugten Ausführungsform weist der Sitzbereich mindestens einen Sockel auf, welche in die Sicherheitskabine konstruktiv eingebunden wird und bevorzugt mit mindestens einem Deformationselement, einem Rohr, einem Profil, einer Platte und/oder einem Querträger verbunden vorliegt. Diese Verbindung umfasst bevorzugt die Verbindung des Sockels mit dem Fahrgestell und/oder den Außenwänden der Sicherheitskabine. Hierfür werden insbesondere Winkelelemente verwendet. Ein Sockel ist bevorzugt eine Basis unterhalb des Sitzbereichs zu dessen Verankerung und/oder Erhöhung. Der Sockel umfasst bevorzugt selber faserverstärkten Kunststoff.

Wenn ein Sitzbereich auf diese Weise in den Aufbau der Sicherheitskabine integriert wird, kann ein dort sitzender Passagier besonders umfassend geschützt werden. Es zeigen sich eine Vielzahl synergistischer Effekte, insbesondere im Zusammenspiel mit den anderen in diesem Dokument offenbarten Sicherheitselementen.

In einer weiteren bevorzugten Ausführungsform weist die Sicherheitskabine seitlich, bevorzugt in mindestens einem Bereich, der eine erhöhte Wahrscheinlichkeit eines Unfalls in Form eines Seitenaufpralls aufweist, Rohre, Profile, Platten, Querträger und/oder Deformationselemente auf. So kann die Sicherheit besonders einfach erhöht werden. Ein Fachmann weiß durch Tests, Statistiken und/oder theoretischen Überlegungen, welche Bereiche einer erhöhten Unfallwahrscheinlichkeit ausgesetzt sind.

In einer weiteren bevorzugten Ausführungsform ist der hintere Teil der Sicherheitskabine als Deformationszone gestaltet wird und weist bevorzugt Deformationselemente auf. Der hintere Teil bezeichnet bevorzugt das Heck und/oder hintere Bereiche der Kabine. Eine Deformationszone wird oftmals bevorzugt ebenfalls als Knautschzone bezeichnet. Hierbei wird insbesondere auf die Umwandlungsfähigkeit der Deformationszone und/oder des Deformationselements zur Erhöhung der Unfallsicherheit abgestellt. Insbesondere gemeinsam mit der Unterteilung der Kabine hat sich diese Vorzugsvariante als überraschend sicher herausgestellt, vor allem wenn die Insassen im vorderen Teil untergebracht sind.

Es ist weiterhin bevorzugt, einen konstruktiven Aufbau dergestalt herzustellen, als dass er einen möglichst weitreichenden Schutz der Insassen vor den Folgen eines eventuellen Unfalls anbietet. Die Bauweise der in den Aufbau integrierten Sicherheitszelle richtet sich je nach Größe, Anwendung und Nutzung (Anzahl der Insassen) aus und ist daher nicht standardisiert, d.h. die Anzahl und Länge der einzelnen Deformationselemente, Kreuz- und/oder Längsverbinder ist für jeden Aufbau unterschiedlich. Der Aufbau kann vollständig oder als Materialmix aus Aluminium-Rohren, Aluminium-Vierkant, Kohlenstofffaser (CFRP) bzw. kohlenstofffaserverstärktem Kunststoff, Glasfaser bzw. glasfaserverstärktem Kunststoff oder anderen geeigneten Materialien bestehen, der z. B. gitterartig verschweißt, laminiert und/oder verklebt wird. Um den Rahmen wird dann ein Aufbau aus Materialien wie z. B. CFK, GFK, PU-, Alu-Platten oder Wabenplatten gebaut. Diese Konstruktion gewährleistet eine hohe Stabilität bei möglichst geringem Gewicht. Durch die an den - je nach Wohnmobil-Aufbau - an unterschiedlichen Punkten der Konstruktion einzufügenden Deformationselemente wird die Aufprallenergie eines anderen Fahrzeugs in geeignete Richtungen und Bereiche der Karosserie abgelenkt und die Insassen dadurch geschützt (Umwandlungsfähigkeit).

In einem weiteren Aspekt betrifft die Erfindung ein Herstellungsverfahren für eine Sicherheitskabine nach einem oder mehreren der vorherigen Ansprüche, umfassend die folgenden Schritte für den Aufbau des äußeren Bereichs von außen nach innen:
- bevorzugt Einziehen einer Lage GFK, bevorzugt mit einer Dicke von 1-10 mm, bevorzugt 2-3 mm;
- Einziehen von 1-20 Lagen, bevorzugt 2-8 Lagen eines kohlenstoff- und/oder aramidfaserverstärkten Kunststoffgewebes;
- bevorzugt Einbringen einer Schicht von XPS-Schaum, bevorzugt mit einer Dicke zwischen 10 mm und 40mm, insbesondere 30 mm;
- bevorzugt Einbringen mindestens einer weiteren Lage des kohlenstoff- und/oder aramidfaserverstärkten Kunststoffgewebes;
- abschließend bevorzugt Einziehen einer weiteren Lage GFK, bevorzugt mit einer Gesamtschichtdicke von 1-10 mm.

Der durchschnittliche Fachmann erkennt, dass technische Merkmale, Definitionen und/oder Vorteile bevorzugter Ausführungsformen der erfindungsgemäßen Sicherheitskabine auch für das hier beschriebene, erfindungsgemäße Herstellungsverfahren gelten.

Das Einziehen faserverstärkten Kunststoffs kann bevorzugt zumindest teilweise manuell vorgenommen werden. Dafür können die Fasergewebe, -gelege und/oder -vliese bevorzugt erst einmal an der angedachten Stelle der Kabine fixiert werden, bevor ein Laminieren, bevorzugt mit einem Harz, z. B. Epoxidharz vorgenommen wird. Es können mehrere Lagen Faserverstärkungen mit verschieden ausgerichteten Fasern auf diese Art bevorzugt übereinander eingebracht werden. Bevorzugt werden dabei einzelne Lagen so bearbeitet, dass keine Lufteinschlüsse entstehen. Dieses Verfahren ist besonders einfach und kostengünstig.

Ebenso kann ein Einziehen von Lagen faserverstärkten Kunstoffs bevorzugt industriell, insbesondere zumindest teilweise maschinell erfolgen, bevorzugt umfassend bereits oben genannte Schritte. Dabei können bevorzugt vor dem Einziehen bereits oben beschriebene Stacks von Verstärkungen gebildet werden, welche dann bevorzugt in einem RTM Verfahren mit Harz versehen werden. Ein Aushärten der entstehenden Bauteile kann bevorzugt unter Wärmezuführung und bei stark verringertem Luftdruck vorgenommen werden, z. B in einem Autoklav. So können die einzelnen Lagen besonders gut miteinander verbunden werden, wobei insbesondere Lufteinschlüsse vermieden werden und die Stabilität und Wartungsfreiheit verbessert wird. Ein solches Verfahren kann besonders gut automatisiert und rationalisiert werden, gleichzeitig wird die Qualität gehoben.

In einer weiteren bevorzugten Ausführungsform ist vorgesehen, nicht nur händisch oder per Autoklav zu laminieren, sondern des Weiteren unter Hochdruck zu pressen. Selbstverständlich ist es auch möglich, diese Handlungen zu kombinieren.

Der Fachmann weiß, dass es in den Eckbereichen der Kabine, in denen bevorzugt faserverstärkte Lagen zur Verbesserung der Stabilität und/oder Festigkeit beim Einziehen zur Überlappung gebracht werden, zu erhöhten Dicken als den bevorzugt genannten kommen kann.

Das Einbringen eines Schaums kann bevorzugt durch Einspritzen des Schaums erfolgen. Ebenso können bevorzugt fertig geschäumte Elemente eingebracht werden.

In einer weiteren Ausführungsform der Erfindung ist die Anzahl der Lagen GFK und/oder des kohlenstoff- und/oder aramidfaserverstärkten Kunststoffgewebes in einem vorderen Bereich, bevorzugt in einem Passagierbereich der Sicherheitskabine höher ist als in anderen Bereichen, insbesondere in einem hinteren Bereich.

In einer weiteren Ausführungsform der Erfindung umfasst das Herstellungsverfahren weiterhin folgende Schritte:
- Einlassen mindestens eines, bevorzugt mindestens zweier Längsträger aus kohlenstofffaserverstärktem Kunststoff, bevorzugt in einem oberen Bereich der Sicherheitskabine und/oder in einem Bodenbereich der Sicherheitskabine insbesondere mit einem Fahrgestell verbindbar, längs zur Fahrtrichtung;
- bevorzugt Einbringen mindestens eines, bevorzugt 2 - 4 Querträger, bevorzugt in einem oberen Bereich der Sicherheitskabine und/oder in einem Bodenbereich, insbesondere mit einem Fahrgestell verbindbar, aus kohlenstofffaserverstärktem Kunststoff quer zur Fahrtrichtung.

Diese Elemente werden bevorzugt im Voraus gefertigt, z. B. manuell oder automatisiert in einer vorgefertigten Form. Insbesondere durch Quer- und/oder Längsträger in einem Bodenbereich, welche mit dem Fahrgestell verbindbar sind und bevorzugt verbunden werden, wird die Festigkeit synergistisch erhöht. Verbindbar sind die Träger bevorzugt, wenn sie entsprechende Verbindungs- bzw. Fügemittel und/oder Verbindungs- bzw. Fügeflächen für eine Verbindung mit dem Fahrzeug aufweisen.

In einem weiteren Aspekt betrifft die Erfindung ein stabilisierendes Deformationselement für ein Wohn- bzw. Reisemobil, bevorzugt zur Verwendung in einer Sicherheitskabine für ein Wohn- bzw. Reisemobil nach der vorstehenden Beschreibung, welches konfiguriert ist für eine Erhöhung der Sicherheit und/oder Stabilisierung einer Fahrgastzelle eines Wohn- bzw. Reisemobils, bevorzugt einer Sicherheitskabine.

Das Deformationselement ist konfiguriert für eine Erhöhung der Sicherheit und/oder Stabilisierung einer Fahrgastzelle eines Wohn- bzw. Reisemobils, bevorzugt einer Sicherheitskabine. Mit Erhöhung der Sicherheit ist insbesondere eine Verbesserung der Stabilität und/oder Umwandlungsfähigkeit gemeint, welche die Unfallsicherheit erhöht. Diese kann z. b: bei Crashtests gemessen und/oder berechnet werden. Konfiguriert bedeutet dabei vor allem, dass von dem Deformationselement eine solche Erhöhung der Sicherheit bewirkt wird.

In einer bevorzugten Ausführungsform der Erfindung weist die Faserverstärkung Fasern einer Zugfestigkeit von mindestens 2.700 MPa, bevorzugt mindestens 2.850 MPa, stärker bevorzugt mindestens 3.000 MPa, und insbesondere mindestens 3.500 MPa und/oder ein Elastizitätsmodul von mindestens 70 GPa, bevorzugt mindestens 100 GPa, stärker bevorzugt mindestens 230 GPa und insbesondere mindestens 370 GPa und/oder eine Bruchdehnung von mindestens 0,7 %, bevorzugt mindestens 1,5 %, stärker bevorzugt mindestens 2,7 % und insbesondere mindestens 3,5 % in eine Richtung auf.

Erfindungsgemäß umfasst das Deformationselement eine gemischte Faserverstärkung mit einem Gewichtsanteil von Aramidfasern zwischen 10% - 90%, wobei darüber hinaus Kohlenstofffasern umfasst sind.

In einer weiteren bevorzugten Ausführungsform der Erfindung umfasst die Faserverstärkung Faserrovings, wobei die Faserrovings eine Filamentzahl zwischen 1.000 und 50.000 und/oder eine Feinheit zwischen 30 und 3.500 tex, bevorzugt zwischen 40 und 400 tex aufweisen.

Der durchschnittliche Fachmann erkennt, dass technische Merkmale, Definitionen und/oder Vorteile bevorzugter Ausführungsformen des erfindungsgemäß in der vorstehend beschriebenen Sicherheitskabine umfassten Deformationselements auch für das hier beschriebene, erfindungsgemäße Deformationselement gelten.

In einer bevorzugten Ausführungsform der Erfindung weist das Deformationselement eine Zugfestigkeit von mehr als 2000 MPa, bevorzugt mehr als 3000 MPa und insbesondere mehr als 3500 MPa auf.

In einer bevorzugten Ausführungsform der Erfindung umfasst das Deformationselement kohlenstofffaserverstärkten Kunststoff, wobei die Kohlenstofffasern aus der Gruppe umfassend Zellulose, Flachs, Hanf-Faser, Sisal und/oder Holz ausgewählt sind.

In einer weiteren bevorzugten Ausführungsform der Erfindung umfasst das Deformationselement mindestens ein stabilisierendes Winkelelement, bevorzugt zur Stabilisierung eines Eckbereichs der Sicherheitskabine nach der vorstehenden Beschreibung.

In einem weiteren Aspekt betrifft die Erfindung ein Verfahren zur Stabilisierung einer Fahrgastzelle eines Wohn- bzw. Reisemobils, bevorzugt einer Sicherheitskabine nach der vorstehenden Beschreibung, umfassend die folgenden Schritte:
- bevorzugt Analyse zur Festlegung sicherheitsrelevanter Bereiche der Fahrgastzelle und/oder der Sicherheitskabine;
- Einbringen eines stabilisierenden Deformationselements nach der vorstehenden Beschreibung in einem sicherheitsrelevanten Bereich der Fahrgastzelle und/oder der Sicherheitskabine.

Der durchschnittliche Fachmann erkennt, dass technische Merkmale, Definitionen und/oder Vorteile bevorzugter Ausführungsformen der erfindungsgemäßen Sicherheitskabine und/oder des erfindungsgemäßen Deformationselements auch für das hier beschriebene, erfindungsgemäße Verfahren gelten.

### Detaillierte Beschreibung

Im Folgenden soll die Erfindung an Hand von Beispielen und Figuren näher erläutert werden, ohne auf diese beschränkt zu sein.

### Kurzbeschreibung der Abbildungen

**Figur 1** zeigt eine dreidimensionale Darstellung eines Wohnmobils mit Sicherheitskabine in einer Außenansicht.
**Figur 2** zeigt eine dreidimensionale Schnittdarstellung des Wohnmobils mit Sicherheitskabine ohne die vordere Außenwand.
**Figur 3** zeigt eine dreidimensionale Schnittdarstellung des Wohnmobils mit Sicherheitskabine ohne die vordere Außenwand, mit wesentlichen Elementen der Innenausstattung.
**Figur 4** zeigt eine dreidimensionale Darstellung des Wohnmobils mit Sicherheitskabine ohne die vordere Außenwand, mit einer Schnittdarstellung der hinteren Außenwand und einer gezeigten Unterteilung in Querrichtung.
**Figur 5** zeigt eine dreidimensionale Darstellung des Wohnmobils mit Sicherheitskabine ohne die vordere Außenwand mit einer Schnittdarstellung der hinteren Außenwand ohne gezigte Unterteilung in Querrichtung.
**Figur 6** zeigt eine dreidimensionale Schnittdarstellung des Wohnmobils ohne weite Teile der Sicherheitskabine, mit Längs- und Querträgern im Bodenbereich der Kabine.
**Figur 7** zeigt eine dreidimensionale Schnittdarstellung des Wohnmobils mit dem Fahrgestell.

### Detaillierte Beschreibung der Abbildung

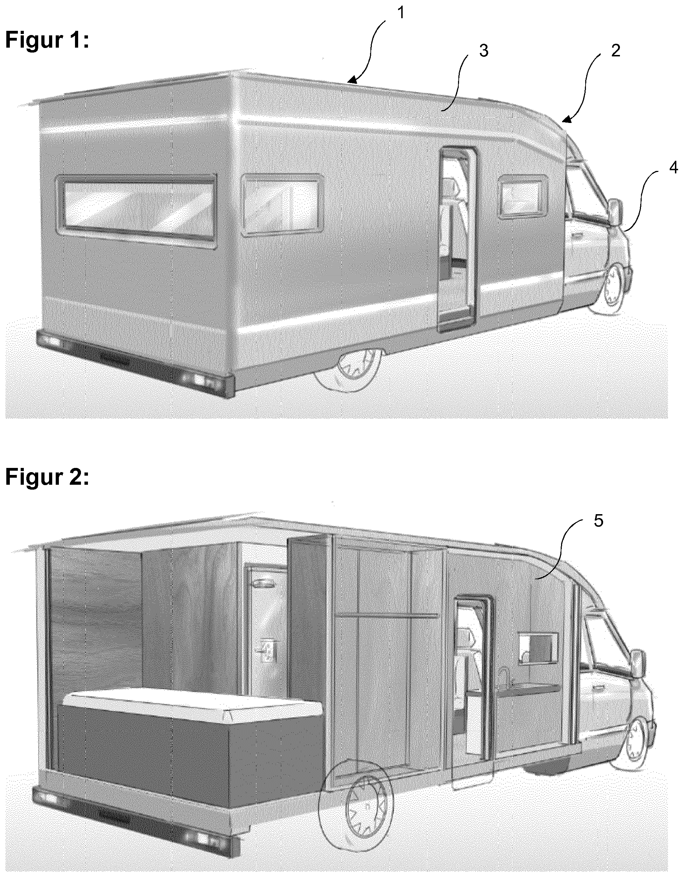

Figur 1 zeigt eine dreidimensionale Darstellung eines Wohnmobils **2** mit Sicherheitskabine **1** in einer Außenansicht. Die Sicherheitskabine **1** mit den äußeren Bereichen **3** befindet sich hinter dem Fahrerhaus **4.**

Figur 2 zeigt eine dreidimensionale Schnittdarstellung des Wohnmobils **2** mit Sicherheitskabine **1** ohne die vordere Außenwand. Der Innenraumbereich **5** wird deutlich sichtbar.

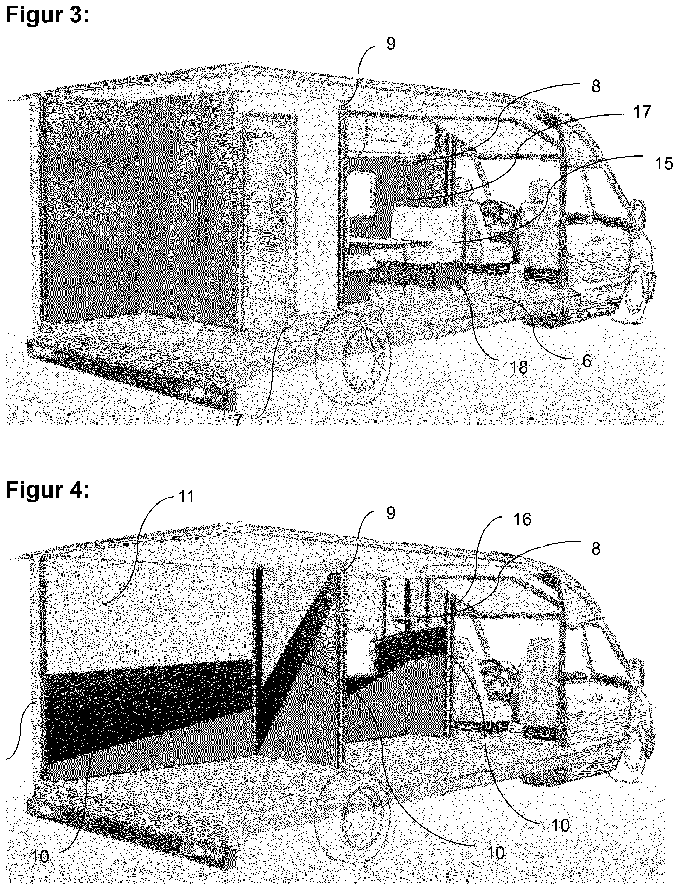

Figur 3 zeigt eine dreidimensionale Schnittdarstellung des Wohnmobils **2** mit Sicherheitskabine **1** ohne die vordere Außenwand, jedoch inklusive der wesentlichen Innenausstattung. Hierbei sind wesentliche sicherheitsrelevante Merkmale und vor allem Deformationselemente der Kabine **1** zu erkennen. Der Innenraumbereich **5** wird z. B. durch eine Unterteilung in Querrichtung **9** in einen vorderen **6** und einen hinteren Bereich **7** aufgeteilt. Der vordere Bereich **6** ist der Passagierbereich während der Fahrt, während im hinteren Bereich **7** das Bad und ein Bett (siehe Figur 2) untergebracht sind. Der Sitzbereich entgegen der Fahrtrichtung **15** im vorderen Bereich **6,** welcher über einen Sockel **18** mit der Sicherheitskabine verbunden ist, ist klar ersichtlich. Unauffällig und als Teil der Inneneinrichtung erscheinend ist über dem Sitzbereich ein stabilisierendes Winkelelement **8** in einem Eckbereich der Kabine **17** zu Erhöhung der Sicherheit eingebracht.

Figur 4 zeigt eine dreidimensionale Darstellung des Wohnmobils **2** mit Sicherheitskabine **1** ohne die vordere Außenwand und die Inneneinrichtung mit einer Schnittdarstellung der hinteren Außenwand, wobei die Unterteilung in Querrichtung **9** gezeigt wird. Zeichnerisch werden die in den äußeren Bereichen **3** und in der Unterteilung in Querrichtung **9** eingebrachten Lagen glasfaserverstärkten Kunststoffs **11** und kohlenstoff- und/oder aramidfaserverstärkten Kunststoffs **10** sichtbar gemacht, welche die Sicherheit der Kabine **1** wesentlich erhöhen. Da die Inneneinrichtung in dieser Figur nicht gezeigt wird, lässt sich auch das stabilisierende Winkelelement **8** im Eckbereich der Kabine **17** deutlich erkennen.

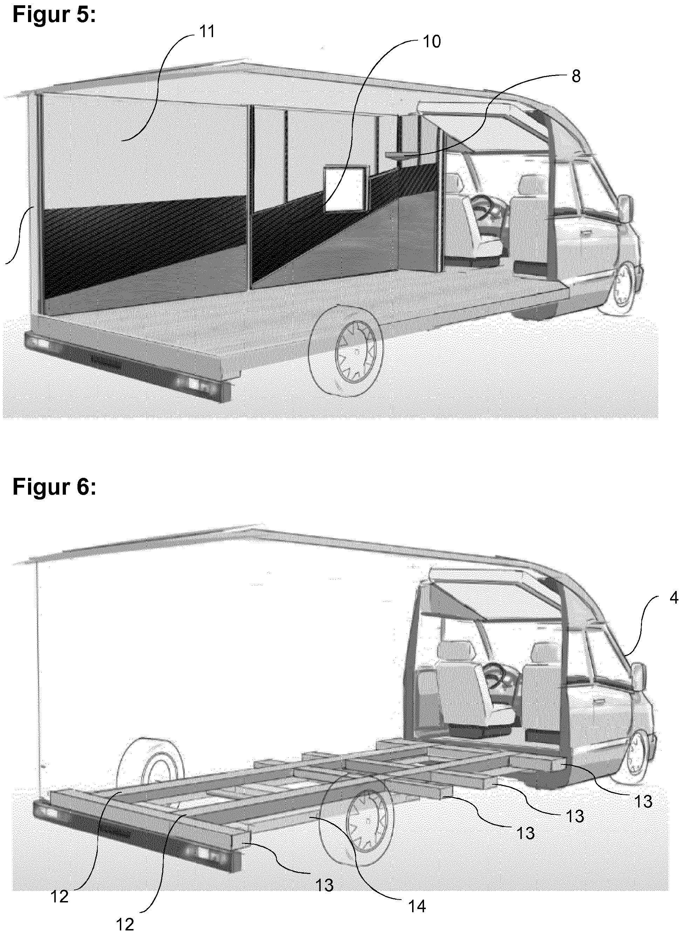

Figur 5 zeigt im Prinzip die gleiche Darstellung der Sicherheitskabine **1** wie Figur 4, jedoch ohne dass die Unterteilung in Querrichtung **9** dargestellt wird, wodurch die eingebrachten Lagen glasfaserverstärkten Kunststoffs **11** und kohlenstoff- und/oder aramidfaserverstärkten Kunststoffs **10** in den äußeren Bereichen **3** der Sicherheitskabine **1** noch deutlicher erkennbar werden.

Figur 6 zeigt eine dreidimensionale Schnittdarstellung des Wohnmobils **2** ohne weite Teile der Sicherheitskabine **1,** mit zwei Längs- **12** und vier Querträgern **13** im Bodenbereich der Kabine **1.** Diese bestehen bevorzugt aus kohlenstoff- und/oder aramidfaserverstärkter Kunststoff und sind bevorzugt sowohl mit dem Fahrgestell **14** als auch mit dem oberen Aufbau der Sicherheitskabine **1** verbunden.

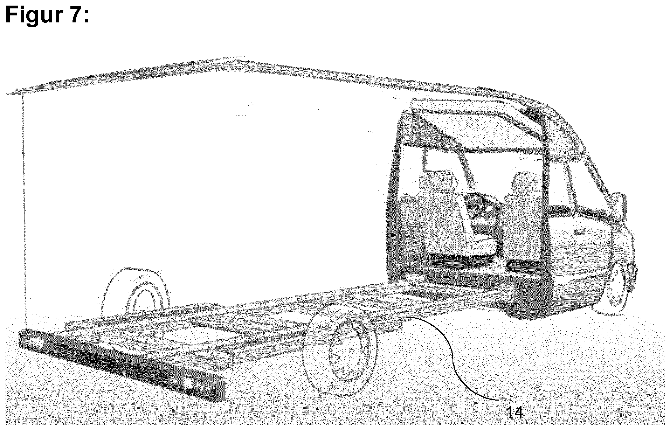

Figur 7 zeigt eine dreidimensionale Schnittdarstellung des Wohnmobils **2** mit dem Fahrgestell **14,** ohne Längs- **12** und Querträger **13.**

### Bezugszeichenliste

- 1: Sicherheitskabine
- 2: Wohn- bzw. Reisemobil
- 3: äußerer Bereich
- 4: Fahrerhaus
- 5: Innenraumbereich
- 6: vorderer Bereich
- 7: hinterer Bereich
- 8: stabilisierendes Winkelelement
- 9: Unterteilung in Querrichtung
- 10: Kohlenstoff- und/oder Aramidfaserverstärkter Kunststoff
- 11: Glasfaserverstärkter Kunststoff
- 12: Längsträger
- 13: Querträger
- 14: Fahrgestell
- 15: Sitzbereich entgegen Fahrtrichtung
- 16: Deformationselement zwischen Fahrerhaus und Innenraumbereich
- 17: Eckbereich der Kabine
- 18: Sockel

## Patentansprüche

1. Sicherheitskabine (1) für ein Wohn- bzw. Reisemobil (2),
wobei
die Sicherheitskabine (1) einen nicht zu einem Fahrerhaus (4) gehörenden Teil des Wohn- bzw. Reisemobil (2) umfasst,
die Sicherheitskabine in mindestens einem Bereich der Kabine mindestens ein stabilisierendes Deformationselement aus faserverstärktem Kunststoff umfasst,
wobei die Faserverstärkung konfiguriert ist für eine Erhöhung einer Festigkeit der Sicherheitskabine (1) und eine Umwandlung von kinetischer Energie bei einem zumindest teilweisen unelastischen Stoß der Sicherheitskabine (1),
wobei das Deformationselement eine gemischte Faserverstärkung umfasst mit einem Gewichtsanteil von Aramidfasern zwischen 10 %- 90%, wobei darüber hinaus Kohlenstofffasern umfasst sind,
wobei die Kohlenstofffasern aus der Gruppe umfassend Zellulose, Flachs, Hanf-Faser, Sisal und/oder Holz ausgewählt sind,
und das Deformationselement eine wabenförmige Struktur aufweist.

2. Sicherheitskabine (1) nach Anspruch 1,
**dadurch gekennzeichnet, dass**
die Faserverstärkung Fasern einer Zugfestigkeit von mindestens 2.700 MPa, bevorzugt mindestens 2.850 MPa, stärker bevorzugt mindestens 3.000 MPa, und insbesondere mindestens 3.500 MPa und/oder ein Elastizitätsmodul von mindestens 70 GPa, bevorzugt mindestens 100 GPa, stärker bevorzugt mindestens 230 GPa und insbesondere mindestens 370 GPa und/oder eine Bruchdehnung von mindestens 0,7 %, bevorzugt mindestens 1,5 %, stärker bevorzugt mindestens 2,7 % und insbesondere mindestens 3,5 % in eine Richtung aufweist.

3. Sicherheitskabine (1) nach Anspruch 1 oder 2,
**dadurch gekennzeichnet, dass**
die Faserverstärkung Faserrovings umfasst, wobei die Faserrovings eine Filamentzahl zwischen 1.000 und 50.000 und/oder eine Feinheit zwischen 30 und 3.500 tex, bevorzugt zwischen 40 und 400 tex aufweisen.

4. Sicherheitskabine (1) nach einem oder mehreren der vorherigen Ansprüche,
**dadurch gekennzeichnet, dass**
das Deformationselement ein Carbon-Gelege umfasst.

5. Sicherheitskabine (1) nach einem oder mehreren der vorherigen Ansprüche,
**dadurch gekennzeichnet, dass**
der äußere Bereich (3) der Sicherheitskabine (1) mindestens ein Deformationselement umfassend eine Lage eines kohlenstoff- und/oder aramidfaserverstärkten Kunststoffgewebes und/oder-geleges (10), bevorzugt
zwischen 1 und 20, bevorzugt 3 - 8 Lagen eines kohlenstoff- und/oder aramidfaserverstärkten Kunststoffgewebes und/oder -geleges (10) und/oder
der äußere Bereich (3) der Sicherheitskabine (1) mindestens ein Deformationselement umfassend mindestens eine Lage glasfaserverstärkten Kunststoffs (11) mit einer Dicke zwischen 1 und 10 mm, bevorzugt zwischen 1 und 5 mm umfasst, wobei bevorzugt
ein vorderer Bereich der Kabine (6) 2 bis 5-mal so viele Lagen eines kohlenstoff- und/oder aramidfaserverstärkten Kunststoffgewebes und/oder geleges (10) umfasst wie ein hinterer Bereich (7), wobei bevorzugt ein vorderer Bereich (6) 2 -10 Lagen, insbesondere 5 Lagen und ein hinterer Bereich (7) 1 - 2 Lagen, insbesondere 2 Lagen eines kohlenstoff- und/oder aramidfaserverstärkten Kunststoffgewebes und/oder -geleges (10) umfasst.

6. Sicherheitskabine (1) nach einem oder mehreren der vorherigen Ansprüche,
**dadurch gekennzeichnet, dass**
der äußere Bereich (3) der Sicherheitskabine (1) einen Schaumstoff umfasst.

7. Sicherheitskabine (1) nach einem oder mehreren der vorherigen Ansprüche,
**dadurch gekennzeichnet, dass**
das Deformationselement mindestens ein stabilisierendes Winkelelement (8), bevorzugt in einem Eckbereich (17) der Sicherheitskabine (1), umfasst und/oder
die Sicherheitskabine im Innenraum (5) mindestens eine Unterteilung in Querrichtung (9) aufweist, welche mindestens ein stabilisierendes Deformationselement umfasst.

8. Sicherheitskabine (1) nach einem oder mehreren der vorherigen Ansprüche,
**dadurch gekennzeichnet, dass**
der Innenraumbereich (5) mindestens einen entgegen der Fahrtrichtung installierten Sitzbereich (15) und/oder
die Sicherheitskabine (1) zwischen Fahrerhaus (4) und Innenraumbereich (5) mindestens ein quer zur Fahrtrichtung eingezogenes Deformationselement (16) aufweist.

9. Sicherheitskabine (1) nach einem oder mehreren der vorherigen Ansprüche,
**dadurch gekennzeichnet, dass**
der Sitzbereich mindestens einen Sockel (18) aufweist, welcher in die Sicherheitskabine (1) konstruktiv eingebunden wird und bevorzugt mit mindestens einem Deformationselement, einem Rohr, einem Profil, einer Platte und/oder einem Querträger verbunden vorliegt.

10. Herstellungsverfahren zur Herstellung einer Sicherheitskabine (1) nach einem oder mehreren der vorherigen Ansprüche, umfassend die folgenden Schritte für den Aufbau des äußeren Bereichs von außen nach innen:
- bevorzugt Einziehen einer Lage glasfaserverstärkten Kunststoffs (11), bevorzugt mit einer Dicke von 1-10 mm, bevorzugt 2-3 mm;
- Einziehen von 1-20 Lagen, bevorzugt 2-8 Lagen eines kohlenstoff- und/oder aramidfaserverstärkten Kunststoffgewebes (10);
- bevorzugt Einbringen einer Schicht von XPS-Schaum, bevorzugt mit einer Dicke zwischen 10 mm und 40mm, insbesondere 30 mm;
- bevorzugt Einbringen mindestens einer weiteren Lage des kohlenstoff- und/oder aramidfaserverstärkten Kunststoffgewebes (10);
- abschließend bevorzugt Einziehen einer weiteren Lage glasfaserverstärkten Kunststoffs (11), bevorzugt mit einer Gesamtschichtdicke von 1-10 mm,
- wobei bevorzugt die Anzahl der Lagen glasfaserverstärkten Kunststoffs (11) und/oder des kohlenstoff- und/oder aramidfaserverstärkten Kunststoffgewebes (10) in einem vorderen Bereich (6) der Sicherheitskabine (1) höher ist als in einem hinteren Bereich (7).

11. Herstellungsverfahren nach Anspruch 10, umfassend weiterhin folgende Schritte:
- Einlassen mindestens eines, bevorzugt mindestens zweier Längsträger (12) aus kohlenstofffaserverstärktem Kunststoff in der Sicherheitskabine (1) längs zur Fahrtrichtung;
- Bevorzugt Einbringen mindestens eines, bevorzugt 2 - 4 Querträger (13) aus kohlenstofffaserverstärktem Kunststoff in der Sicherheitskabine (1) quer zur Fahrtrichtung.

12. Stabilisierendes Deformationselement für ein Wohn- bzw. Reisemobil (2), bevorzugt zur Verwendung in einer Sicherheitskabine (1) für ein Wohn- bzw. Reisemobil (2) nach einem oder mehreren der vorherigen Ansprüche 1 - 9,
wobei
das Deformationselement faserverstärkten Kunststoff umfasst, und zumindest teilweise in einem äußeren Bereich (3) der Sicherheitskabine (1) anbringbar ist, wobei die Faserverstärkung konfiguriert ist für eine Erhöhung einer Festigkeit der Sicherheitskabine (1) und eine Umwandlung von kinetischer Energie bei einem zumindest teilweisen unelastischen Stoß der Sicherheitskabine (1),
wobei das Deformationselement eine gemischte Faserverstärkung umfasst mit einem Gewichtsanteil von Aramidfasern zwischen 10 %- 90%, wobei darüber hinaus Kohlenstofffasern umfasst sind,
wobei die Kohlenstofffasern aus der Gruppe umfassend Zellulose, Flachs, Hanf-Fasern, Sisal und/oder Holz ausgewählt sind,
und das Deformationselement eine wabenförmige Struktur aufweist, und
wobei bevorzugt die Faserverstärkung Fasern einer Zugfestigkeit von mindestens 1000 MPa, bevorzugt mindestens 2000 MPa, stärker bevorzugt mindestens 3000 MPa und insbesondere mindestens 3500 MPa und/oder einem Elastizitätsmodul von mindestens 50 GPa, bevorzugt mindestens 90 GPa und insbesondere mindestens 130 GPa in mindestens eine Richtung umfasst und/oder
die Faserverstärkung Faserrovings umfasst, wobei die Faserrovings eine Filamentzahl zwischen 1.000 und 50.000 und/oder eine Feinheit zwischen 30 und 3.500 tex, bevorzugt zwischen 40 und 400 tex aufweisen.

13. Stabilisierendes Deformationselement nach Anspruch 12,
**dadurch gekennzeichnet, dass**
das Deformationselement mindestens ein stabilisierendes Winkelelement (8), bevorzugt zur Stabilisierung eines Eckbereichs (17) der Sicherheitskabine (1) nach einem oder mehreren der vorherigen Ansprüche 1 - 9, umfasst.

14. Verfahren zur Stabilisierung einer Fahrgastzelle eines Wohn- bzw. Reisemobils (2), bevorzugt einer Sicherheitskabine (1) nach den Ansprüchen 1 - 9, umfassend die folgenden Schritte:
- Analyse zur Festlegung sicherheitsrelevanter Bereiche der Fahrgastzelle und/oder der Sicherheitskabine (1);
- Einbringen eines stabilisierenden Deformationselements nach einem oder mehreren der Ansprüche 12 oder 13 in einem sicherheitsrelevanten Bereich der Fahrgastzelle und/oder der Sicherheitskabine (1).

## Claims

1. A safety cabin (1) for a residential or camper van (2), wherein the safety cabin (1) comprises a part of the residential or camper van (2) which does not belong to a driver's cab (4), wherein the safety cabin comprises at least one stabilising deformation element made of fibre-reinforced plastic in at least one area of the cabin,
wherein the fibre reinforcement is configured for an increase in a strength of the safety cabin (1) and a conversion of kinetic energy in the event of an at least partially inelastic impact on the safety cabin (1),
wherein the deformation element comprises a mixed fibre reinforcement with a weight percentage of aramid fibres between 10%-90%, which also comprises carbon fibres,
wherein the carbon fibres are selected from the group comprising cellulose, flax, hemp fibre, sisal and/or wood,
and the deformation element has a honeycomb structure.

2. The safety cabin (1) according to claim 1,
**characterised in that**
the fibre reinforcement has fibres of a tensile strength of at least 2,700 MPa, preferably at least 2,850 MPa, more preferably at least 3,000 MPa, and in particular at least 3,500 MPa and/or a modulus of elasticity of at least 70 GPa, preferably at least 100 GPa, more preferably at least 230 GPa and in particular at least 370 GPa and/or an elongation at break of at least 0.7%, preferably at least 1.5%, more preferably at least 2.7% and in particular at least 3.5% in one direction.

3. The safety cabin (1) according to claim 1 or 2, **characterised in that**
the fibre reinforcement comprises fibre rovings, wherein the fibre rovings have a filament count between 1,000 and 50,000 and/or a fineness between 30 and 3,500 tex, preferably between 40 and 400 tex.

4. The safety cabin (1) according to one or more of the preceding claims,
**characterised in that**
the deformation element comprises a carbon laid fabric.

5. The safety cabin (1) according to one or more of the preceding claims,
**characterised in that**
the outer area (3) of the safety cabin (1) comprises at least one deformation element comprising a layer of a carbon and/or aramid fibre-reinforced plastic fabric and/or laid fabric (10), preferably
between 1 and 20, preferably 3-8 layers of a carbon and/or aramid fibre-reinforced plastic fabric and/or laid fabric (10) and/or the outer area (3) of the safety cabin (1) comprises at least one deformation element comprising at least one layer of glass fibre-reinforced plastic (11) with a thickness between 1 and 10 mm, preferably between 1 and 5 mm, preferably wherein
a front area of the cabin (6) comprises 2 to 5 times as many layers of a carbon and/or aramid fibre-reinforced plastic fabric and/or laid fabric (10) as a rear area (7), preferably wherein a front area (6) comprises 2-10 layers, in particular 5 layers and a rear area (7) comprises 1-2 layers, in particular 2 layers of a carbon and/or aramid fibre-reinforced plastic fabric and/or laid fabric (10).

6. The safety cabin (1) according to one or more of the preceding claims,
**characterised in that**
the outer area (3) of the safety cabin (1) comprises a foam.

7. The safety cabin (1) according to one or more of the preceding claims,
**characterised in that**
the deformation element comprises at least one stabilising angle element (8), preferably in a corner area (17) of the safety cabin (1), and/or
the safety cabin in the interior (5) has at least one subdivision in the transverse direction (9), which comprises at least one stabilising deformation element.

8. The safety cabin (1) according to one or more of the preceding claims,
**characterised in that**
the interior area (5) has at least one seating area (15) installed against the direction of travel and/or
the safety cabin (1) has at least one deformation element (16) inserted transversely to the direction of travel between the driver's cab (4) and the interior area (5).

9. The safety cabin (1) according to one or more of the preceding claims,
**characterised in that**
the seating area has at least one base (18) which is structurally integrated into the safety cabin (1) and is preferably present connected to at least one deformation element, a tube, a profile, a plate and/or a crossbeam.

10. A manufacturing method for manufacturing a safety cabin (1) according to one or more of the preceding claims, comprising the following steps for the construction of the outer area from the outside to the inside:
- preferably inserting a layer of glass fibre-reinforced plastic (11), preferably with a thickness of 1-10 mm, preferably 2-3 mm;
- inserting 1-20 layers, preferably 2-8 layers, of a carbon and/or aramid fibre-reinforced plastic fabric (10);
- preferably introducing a sheet of XPS foam, preferably with a thickness between 10 mm and 40 mm, in particular 30 mm;
- preferably introducing at least one further layer of the carbon and/or aramid fibre-reinforced plastic fabric (10);
- finally preferably inserting a further layer of glass fibre-reinforced plastic (11), preferably with a total sheet thickness of 1-10 mm,
- preferably wherein the number of layers of glass fibre-reinforced plastic (11) and/or the carbon and/or aramid fibre-reinforced plastic fabric (10) is higher in a front area (6) of the safety cabin (1) than in a rear area (7).

11. The manufacturing method according to claim 10, further comprising the following steps:
- embedding at least one, preferably at least two, longitudinal beams (12) made of carbon fibre-reinforced plastic in the safety cabin (1) longitudinally to the direction of travel;
- preferably introducing at least one, preferably 2-4 crossbeams (13) made of carbon fibre-reinforced plastic in the safety cabin (1) transversely to the direction of travel.

12. A stabilising deformation element for a residential or camper van (2), preferably for use in a safety cabin (1) for a residential or camper van (2) according to one or more of the preceding claims 1-9,
wherein the deformation element comprises fibre-reinforced plastic and can be attached at least partially in an outer area (3) of the safety cabin (1), wherein the fibre reinforcement is configured for an increase in a strength of the safety cabin (1) and a conversion of kinetic energy in the event of an at least partially inelastic impact on the safety cabin (1),
wherein the deformation element comprises a mixed fibre reinforcement with a weight percentage of aramid fibres between 10% - 90%, which also comprises carbon fibres, wherein the carbon fibres are selected from the group comprising cellulose, flax, hemp fibre, sisal and/or wood,
and the deformation element has a honeycomb structure, and preferably wherein the fibre reinforcement comprises fibres of a tensile strength of at least 1000 MPa, preferably at least 2000 MPa, more preferably at least 3000 MPa and in particular at least 3500 MPa and/or a modulus of elasticity of at least 50 GPa, preferably at least 90 GPa and in particular at least 130 GPa in at least one direction, and/or
the fibre reinforcement comprises fibre rovings, wherein the fibre rovings have a filament count between 1,000 and 50,000 and/or a fineness between 30 and 3,500 tex, preferably between 40 and 400 tex.

13. The stabilising deformation element according to claim 12, **characterised in that**
the deformation element comprises at least one stabilising angle element (8), preferably for stabilising a corner region (17) of the safety cabin (1) according to one or more of the preceding claims 1-9.

14. A method for stabilising a passenger compartment of a residential or camper van (2), preferably a safety cabin (1) according to claims 1-9, comprising the following steps:
- analysing to define safety-relevant areas of the passenger compartment and/or the safety cabin (1);
- introducing a stabilising deformation element according to one or more of Claims 12 or 13 in a safety-relevant area of the passenger compartment and/or the safety cabin (1).

## Revendications

1. Cabine de sécurité (1) pour un camping-car ou une caravane automobile (2),
dans laquelle la cabine de sécurité (1) comprend une partie du camping-car ou de la caravane automobile (2) qui n'appartient pas à une cabine de conduite (4),
la cabine de sécurité comprend au moins un élément de déformation stabilisateur en plastique renforcé par des fibres dans au moins une zone de la cabine,
dans laquelle le renfort fibreux est configuré pour augmenter la résistance de la cabine de sécurité (1) et pour convertir l'énergie cinétique en cas de choc au moins partiellement inélastique sur la cabine de sécurité (1),
dans laquelle l'élément de déformation comprend un renfort fibreux mixte avec une proportion en poids de fibres d'aramide compris entre 10 % et 90 %, qui comprend en outre des fibres de carbone,
dans laquelle les fibres de carbone sont choisies dans le groupe composé de la cellulose, du lin, de la fibre de chanvre, du sisal et/ou du bois,
et l'élément de déformation présente une structure en nid d'abeilles.

2. Cabine de sécurité (1) selon la revendication 1,
**caractérisée en ce que**
les fibres de renfort fibreux présentent une résistance à la traction d'au moins 2 700 MPa, de préférence d'au moins 2 850 MPa, de manière davantage préférée d'au moins 3 000 MPa, et en particulier d'au moins 3 500 MPa et/ou un module d'élasticité d'au moins 70 GPa, de préférence d'au moins 100 GPa, de manière davantage préférée d'au moins 230 GPa et en particulier d'au moins 370 GPa et/ou un allongement à la rupture d'au moins 0,7 %, de préférence d'au moins 1,5 %, de manière davantage préférée d'au moins 2,7 % et en particulier d'au moins 3,5 % dans une direction.

3. Cabine de sécurité (1) selon la revendication 1 ou 2,
**caractérisée en ce que**
le renfort fibreux comprend des mèches de fibres, dans laquelle les mèches de fibres présentent un nombre de filaments compris entre 1 000 et 50 000 et/ou une finesse comprise entre 30 et 3 500 tex, de préférence entre 40 et 400 tex.

4. Cabine de sécurité (1) selon une ou plusieurs des revendications précédentes,
**caractérisée en ce que**
l'élément de déformation comprend un tissu non tissé de carbone.

5. Cabine de sécurité (1) selon une ou plusieurs des revendications précédentes,
**caractérisée en ce que**
la zone extérieure (3) de la cabine de sécurité (1) présente de préférence au moins un élément de déformation comprenant une couche d'un tissu et/ou tissu non tissé plastique renforcé de fibres de carbone et/ou d'aramide (10), de préférence entre 1 et 20, de préférence 3 à 8 couches d'un tissu et/ou tissu non tissé en plastique renforcé de fibres de carbone et/ou d'aramide (10) et/ou
la zone extérieure (3) de la cabine de sécurité (1) comprend au moins un élément de déformation comprenant au moins une couche de matière plastique renforcée de fibres de verre (11) d'une épaisseur comprise entre 1 et 10 mm, de préférence entre 1 et 5 mm, dans laquelle de préférence
une zone avant de la cabine (6) comprend 2 à 5 fois plus de couches d'un tissu et/ou tissu non tissé plastique renforcé de fibres de carbone et/ou d'aramide (10) qu'une zone arrière (7), dans laquelle une zone avant (6) comprend de préférence 2 à 10 couches, en particulier 5 couches et une zone arrière (7) 1 à 2 couches, en particulier 2 couches d'un tissu et/ou tissu non tissé plastique renforcé de fibres de carbone et/ou d'aramide (10) .

6. Cabine de sécurité (1) selon une ou plusieurs des revendications précédentes,
**caractérisée en ce que**
la zone extérieure (3) de la cabine de sécurité (1) comprend une mousse.

7. Cabine de sécurité (1) selon une ou plusieurs des revendications précédentes,
**caractérisée en ce que**
l'élément de déformation comprend au moins un élément d'angle de stabilisation (8), de préférence dans une zone d'angle (17) de la cabine de sécurité (1), et/ou
la cabine de sécurité à l'intérieur (5) présente au moins une subdivision dans la direction transversale (9), qui comprend au moins un élément de déformation stabilisateur.

8. Cabine de sécurité (1) selon une ou plusieurs des revendications précédentes,
**caractérisée en ce que**
la zone intérieure (5) présente au moins une zone d'assise (15) installée dans la direction opposée au sens de déplacement et/ou la cabine de sécurité (1) présente au moins un élément de déformation (16) rentré transversalement à la direction de déplacement entre la cabine de conduite (4) et la zone intérieure (5) .

9. Cabine de sécurité (1) selon une ou plusieurs des revendications précédentes,
**caractérisée en ce que**
la zone d'assise présente au moins un socle (18) qui est structurellement intégré à la cabine de sécurité (1) et est de préférence relié à au moins un élément de déformation, un tube, un profilé, une plaque et/ou une traverse.

10. Procédé de fabrication pour fabriquer une cabine de sécurité (1) selon une ou plusieurs des revendications précédentes, comprenant les étapes suivantes pour la construction de la zone extérieure de l'extérieur vers l'intérieur :
- de préférence l'insertion d'une couche de plastique renforcé de fibres de verre (11), de préférence d'une épaisseur de 1 à 10 mm, de préférence de 2 à 3 mm ;
- l'insertion de 1 à 20 couches, de préférence 2 à 8 couches, d'un tissu plastique renforcé de fibres de carbone et/ou d'aramide (10) ;
- de préférence l'introduction d'une couche de mousse XPS, de préférence d'une épaisseur comprise entre 10 mm et 40 mm, en particulier 30 mm ;
- de préférence l'introduction d'au moins une autre couche du tissu plastique renforcé de fibres de carbone et/ou d'aramide (10) ;
- enfin, de préférence l'insertion d'une autre couche de plastique renforcé de fibres de verre (11), de préférence avec une épaisseur de couche totale de 1 à 10 mm,
- dans lequel de préférence le nombre de couches de plastique renforcé de fibres de verre (11) et/ou de tissu plastique renforcé de fibres de carbone et/ou d'aramide (10) est plus élevé dans une zone avant (6) de la cabine de sécurité (1) que dans une zone arrière (7).

11. Procédé de fabrication selon la revendication 10, comprenant en outre les étapes suivantes :
- l'admission d'au moins une, de préférence au moins deux poutres longitudinales (12) en plastique renforcé de fibres de carbone dans la cabine de sécurité (1) dans le sens de déplacement ;
- de préférence l'introduction d'au moins une, de préférence 2 à 4 traverses (13) en plastique renforcé de fibres de carbone dans la cabine de sécurité (1) transversalement à la direction de déplacement.

12. Élément de déformation stabilisateur pour un camping-car ou une caravane automobile (2), de préférence pour une utilisation dans une cabine de sécurité (1) pour un camping-car ou une caravane automobile (2) selon une ou plusieurs des revendications précédentes 1 à 9,
dans lequel l'élément de déformation comprend du plastique renforcé de fibres et peut être fixé au moins partiellement dans une zone extérieure (3) de la cabine de sécurité (1), dans lequel le renfort fibreux est configuré pour augmenter la résistance de la cabine de sécurité (1) et pour convertir l'énergie cinétique en cas de choc au moins partiellement inélastique sur la cabine de sécurité (1),
dans lequel l'élément de déformation comprend un renfort fibreux mixte avec une proportion en poids de fibres d'aramide comprise entre 10 % et 90 %, qui comprend en outre des fibres de carbone, dans lequel les fibres de carbone sont choisies dans le groupe composé de la cellulose, du lin, de fibres de chanvre, du sisal et/ou du bois,
et l'élément de déformation présente une structure en nid d'abeilles, et
dans lequel de préférence les fibres de renfort fibreux présentent une résistance à la traction d'au moins 1 000 MPa, de préférence d'au moins 2 000 MPa, de manière davantage préférée d'au moins 3 000 MPa et en particulier d'au moins 3 500 MPa et/ou un module d'élasticité d'au moins 50 GPa, de préférence d'au moins 90 GPa et en particulier au moins 130 GPa dans au moins une direction et/ou
le renfort fibreux comprend des mèches de fibres, dans lequel les mèches de fibres présentent un nombre de filaments compris entre 1 000 et 50 000 et/ou une finesse comprise entre 30 et 3 500 tex, de préférence entre 40 et 400 tex.

13. Élément de déformation stabilisateur selon la revendication 12,
**caractérisé en ce que**
l'élément de déformation comprend au moins un élément d'angle de stabilisation (8), de préférence pour stabiliser une zone d'angle (17) de la cabine de sécurité (1) selon une ou plusieurs des revendications précédentes 1 à 9.

14. Procédé de stabilisation d'un habitacle d'un camping-car ou d'une caravane automobile (2), de préférence une cabine de sécurité (1) selon les revendications 1 à 9, comprenant les étapes suivantes :
- analyse pour définir les zones pertinentes pour la sécurité de l'habitacle et/ou de la cabine de sécurité (1) ;
- introduction d'un élément de déformation stabilisateur selon une ou plusieurs des revendications 12 ou 13 dans une zone pertinente pour la sécurité de l'habitacle et/ou de la cabine de sécurité (1).
